# EUROPEAN PATENT SPECIFICATION

(11) **EP 2 744 285 B1**
(45) Date of publication and mention of the grant of the patent: **24.10.2018**
(21) Application number: 12822304.7
(22) Date of filing: 13.08.2012
(51) Int. Cl.: H04W 8/26

(54) **METHOD AND DEVICE FOR SHORT-DELAY RESOURCE MANAGEMENT, AND WIRELESS ACCESS NETWORK DEVICE**
VERFAHREN UND VORRICHTUNG FÜR RESSOURCENVERWALTUNG MIT KURZEN VERZÖGERUNGEN UND NETZWERKVORRICHTUNG MIT DRAHTLOSEM ZUGANG
PROCÉDÉ ET DISPOSITIF DE GESTION DE RESSOURCES À FAIBLE RETARD ET DISPOSITIF DE RÉSEAU D'ACCÈS SANS FIL

(30) Priority: 11.08.2011 CN 201110229782
(43) Date of publication of application: 18.06.2014
(73) Proprietor: Huawei Technologies Co., Ltd., Longgang District Shenzhen, Guangdong 518129 (CN)
(72) Inventor: ZHU, Song, Shenzhen Guangdong 518129 (CN); ZHEN, Bin, Shenzhen Guangdong 518129 (CN); LI, Yue, Shenzhen Guangdong 518129 (CN); MA, Jie, Shenzhen Guangdong 518129 (CN)
(74) Representative: Thun, Clemens
(86) International application number: PCT/CN2012/080032
(87) International publication number: WO 2013/020526

(56) References cited:
- EP-A1- 2 354 943
- WO-A1-2011/082110
- CN-A- 101 132 621
- CN-A- 101 772 164
- CN-A- 101 801 091
- US-A1- 2007 274 288

## Description

### TECHNICAL FIELD

The present invention relates to the field of wireless communications technologies, and in particular, to a short-latency resource management method and device, and a radio access network device.

### BACKGROUND

The Internet of Things (for example, Machine to Machine, M2M for short) is another wave of the information industry after computers, the Internet, and a mobile communications network. The Internet of Things connects all things to the Internet by using information sensing devices, so as to implement intelligent recognition and management. For example, reporting and acquiring of data between a wireless water meter, a wireless watt-hour meter, a vending machine, a POS machine, and the like and a control center are implemented by using the Internet of Things. A terminal, such as the wireless water meter and watt-hour meter, the vending machine, the POS machine, and the like, may report the data to the control center by using a wireless connection or may also acquire the data from the control center.

In an M2M application scenario, a data transmission latency requirement is extremely strict. For example, in a smart grid, it is expected that communication latency can be within 10 ms. However, a current cellular communication system is mainly designed for human to human (Human to Human; H2H for short below) communication and can hardly meet requirements of M2M communication. Moreover, the amount of data in the M2M communication is generally small.

In the M2M communication, if an H2H communication manner is used, interaction of a large amount of extra signaling and signaling congestion may be caused. Therefore, in the prior art, a part of physical resources are generally assigned for dedicated use in the M2M communication. Latency of data transmitted by the part of resources is relatively low, and therefore the part of resources may be called short-latency resources. The part of short-latency resources are mainly used by a terminal to report data to the control center and therefore may also be called uplink short-latency resources. However, after the short-latency resources for the M2M communication are assigned, a base station does not manage the short-latency resources effectively and therefore security and validity of the short-latency resources cannot be ensured In EP 2 354 943 A1 devices are classified as member of a resource group based on device information.

### SUMMARY

Embodiments of the present invention provide a short-latency resource management method and device, and a radio access network device, so as to solve a defect in the prior art that a short-latency resource in M2M communication is not effectively managed and security and effectiveness of the short-latency resource cannot be ensured, thereby implementing effective management for the short-latency resource in the M2M communication.
In a first aspect a short-latency resource management method performed by a short-latency resource management device is provided, the method comprising:
**a.)** receiving a terminal identifier and parameter information of a first terminal that has a short-latency requirement, wherein the parameter information is corresponding to a short-latency communication performed by the first terminal, and wherein the terminal identifier and the parameter information of the first terminal are sent by a radio access network device;
**b.)** acquiring a first short-latency resource identifier corresponding to a first short-latency resource according to the parameter information of the first terminal and at least one pre-established correspondence relationship between parameter information, a short-latency resource identifier, and a terminal identifier, wherein the first short-latency resource identifier is a short-latency resource identifier matching the first terminal; and
**c.)** assigning the terminal identifier of the first terminal to a first short-latency resource group to which the first short-latency resource identifier belongs according to the parameter information of the first terminal and
**d.)** updating the at least one correspondence relationship by establishing a further correspondence relationship being a correspondence relationship between the terminal identifier of the first terminal, the first short-latency resource identifier and the parameter information of the first terminal that are corresponding to the first short latency resource group
**e.)** sending, the first short-latency resource identifier to the radio access network device.

In a first implementation form of the first aspect the parameter information of the first terminal comprises any one or more of the following: a destination node address, a latency parameter, a maximum number of retransmission times, quality of service, and a service type that are corresponding to the short-latency communication performed by the first terminal.
In a second implementation form of the first aspect before step a.) the method further comprises:
   receiving a terminal identifier and parameter information of at least one terminal and at least one short-latency resource identifier that are sent by the radio access network device, wherein the at least one short-latency resource identifier comprises a short-latency resource identifier that is corresponding to at least one short-latency resource allocated to the at least one terminal by the radio access network device, and the at least one terminal also has a short-latency requirement;
   grouping the at least one short-latency resource identifier according to the parameter information of the at least one terminal, so as to obtain at least one short-latency resource group, wherein the at least one short-latency resource group comprises the first short-latency resource group;
   assigning a terminal identifier of the each terminal in the terminal identifier of the at least one terminal to a short-latency resource group to which the short-latency resource identifier corresponding to the terminal identifier of the terminal belongs, and updating the at least one short-latency resource group; and
   establishing the at least one correspondence relationship between parameter information, the short-latency resource identifier, and the terminal identifier according to the at least one short-latency resource group that is updated, wherein the at least one correspondence relationship between the parameter information, the short-latency resource identifier, and the terminal identifier is corresponding to the at least one short-latency resource group in a one-to-one manner.
In a third implementation form of the first aspect the acquiring the first short-latency resource identifier according to the parameter information of the first terminal and at least one pre-established correspondence relationship between parameter information, the short-latency resource identifier, and the terminal identifier comprises: determining, according to the parameter information of the first terminal, whether a short-latency resource group matching the first terminal exists in the at least one short-latency resource group;
   when the short-latency resource group matching the first terminal exists in the at least one short-latency resource group, further determining whether a short-latency resource that is corresponding to the short-latency resource group matching the first terminal is capable of meeting a requirement of quality of service of all corresponding terminals after the terminal identifier of the first terminal is assigned to the short-latency resource group matching the first terminal, wherein all the corresponding terminals are terminals corresponding to all terminal identifiers comprised in the short-latency resource group matching the first terminal;
   when the short-latency resource that is corresponding to the short-latency resource group matching the first terminal is capable of meeting the requirement of the quality of service of the terminals corresponding to all the terminal identifiers after the terminal identifier of the first terminal is assigned to the short-latency resource group matching the first terminal, using a short-latency resource identifier that is corresponding to the short-latency resource group matching the first terminal as the first short-latency resource identifier matching the first terminal, so as to use a short-latency resource corresponding to the first short-latency resource identifier as a short-latency resource of the first terminal;
   otherwise, when the short-latency resource that is corresponding to the short-latency resource group matching the first terminal is incapable of meeting the requirement of the quality of service of the terminals corresponding to all the terminal identifiers after the terminal identifier of the first terminal is assigned to the short-latency resource group matching the first terminal, sending the radio access network device a short-latency resource assignment request that carries the terminal identifier of the first terminal, so as to request the radio access network device to assign a short-latency resource for the first terminal; receiving a second short-latency resource identifier sent by the radio access network device, wherein the second short-latency resource identifier is a short-latency resource identifier that is corresponding to the short-latency resource allocated to the first terminal by the radio access network device; adding the second short-latency resource identifier to the short-latency resource group matching the first terminal; and using the short-latency resource identifier that is corresponding to the short-latency resource group matching the first terminal as the first short-latency resource identifier, so as to use the short-latency resource corresponding to the first short-latency resource identifier as the short-latency resource of the first terminal; and when no short-latency resource group matching the first terminal exists in the at least one short-latency resource group, sending the radio access network device the short-latency resource assignment request that carries the terminal identifier of the first terminal, so as to request the radio access network device to assign a short-latency resource for the first terminal; receiving a third short-latency resource identifier sent by the radio access network device, wherein the third short-latency resource identifier is a short-latency resource identifier that is corresponding to the short-latency resource allocated to the first terminal by the radio access network device; and using the third short-latency resource identifier as the first short-latency resource identifier matching the first terminal.
In a fourth implementation form of the first aspect the method further comprises: receiving a validity authentication request that carries a terminal identifier of a second terminal and the first short-latency resource identifier and is sent by the radio access network device, wherein the validity authentication request is sent by the radio access network device according to data that carries the terminal identifier of the second terminal, is sent by the second terminal, and is received over the first short-latency resource; and
   determining whether it is valid for the second terminal to occupy the first short-latency resource; if it is valid, sending validity information to the radio access network device, so as to allow the radio access network device to forward the data to a corresponding core network node or a service server according to the validity information; otherwise, if it is invalid, sending invalidity information to the radio access network device, so as to allow the radio access network device to reject access of the second terminal according to the invalidity information and discard the data.
In a fifth implementation form of the first aspect the determining whether it is valid for the second terminal to occupy the first short-latency resource comprises:
   determining, according to the correspondence relationship between the parameter information, the short-latency resource identifier, and the terminal identifier that are corresponding to the first short-latency resource group, whether the terminal identifier of the second terminal is corresponding to the first short-latency resource identifier; if corresponding, determining that it is valid for the second terminal to occupy the first short-latency resource; otherwise, determining that it is invalid for the second terminal to occupy the first short-latency resource.
In a sixth implementation form of the first aspect the method further comprises: receiving a query request that carries the first short-latency resource identifier and is sent by the radio access network device;
   acquiring at least one terminal identifier corresponding to the first short-latency resource identifier according to the correspondence relationship between the parameter information, the short-latency resource identifier, and the terminal identifier that are corresponding to the first short-latency resource group, wherein the at least one terminal identifier comprises the terminal identifier of the first terminal; and
   sending the at least one terminal identifier to the radio access network device.
In a second aspect a short-latency resource management device is provided configured to perform any of the above mentioned methods.

According to the short-latency resource management method and device, and the radio access network device in the embodiments of the present invention, a terminal identifier and parameter information of a first terminal that has a short-latency requirement are received, where the terminal identifier and the parameter information of the first terminal are sent by the radio access network device; a first short-latency resource identifier is acquired according to the parameter information of the first terminal and at least one pre-established correspondence relationship between parameter information, a short-latency resource identifier, and a terminal identifier, where the first short-latency resource identifier is a short-latency resource identifier matching the first terminal; the terminal identifier of the first terminal is assigned to a first short-latency resource group to which the first short-latency resource identifier belongs; and the terminal identifier of the first terminal is updated into a correspondence relationship between parameter information, a short-latency resource identifier, and a terminal identifier that are corresponding to the first short-latency resource group, so that the first terminal is managed to use a short-latency resource corresponding to the first short-latency resource identifier to send data. A correspondence relationship between the terminal identifier of the first terminal and the first short-latency resource identifier can be established by using the technical solutions in the embodiments of the present invention, thereby implementing management for a short-latency resource. This facilitates subsequent maintenance of the short-latency resource and can effectively improve usage efficiency of the short-latency resource.

### BRIEF DESCRIPTION OF DRAWINGS

To illustrate the technical solutions in the embodiments of the present invention more clearly, the following briefly introduces the accompanying drawings required for describing the embodiments. Apparently, the accompanying drawings in the following description show merely some embodiments of the present invention, and persons of ordinary skill in the art may still derive other drawings from these accompanying drawings without creative efforts.
FIG. 1 is a flowchart of a short-latency resource management method according to an embodiment of the present invention;
FIG. 2 is a flowchart of a short-latency resource management method according to another embodiment of the present invention;
FIG. 3 is a flowchart of a short-latency resource management method according to still another embodiment of the present invention;
FIG. 4 is a flowchart of a short-latency resource management method according to still another embodiment of the present invention;
FIG. 5 is a schematic structural diagram of a short-latency resource management device according to an embodiment of the present invention;
FIG. 6 is a schematic structural diagram of a short-latency resource management device according to another embodiment of the present invention;
FIG. 7 is a schematic structural diagram of a short-latency resource management device according to still another embodiment of the present invention;
FIG. 8 is a structural diagram of a radio access network device according to an embodiment of the present invention;
FIG. 9 is a structural diagram of a radio access network device according to another embodiment of the present invention; and
FIG. 10 is a schematic structural diagram of a short-latency resource management system according to an embodiment of the present invention.

### DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

A radio access network device allocates a physical resource for a terminal according to current network payload and a terminal use condition and notifies the allocated resource to a related terminal by using a broadcast manner. In this way, the terminal may perform, over the allocated resource, M2M communication with a control center according to received resource information. However, after the short-latency resource for the M2M communication is assigned, a base station does not manage the short-latency resource effectively and therefore security and validity of the short-latency resource cannot be ensured.

To solve the problem, the present invention provides a short-latency resource management method and apparatus. Details are described as follows:

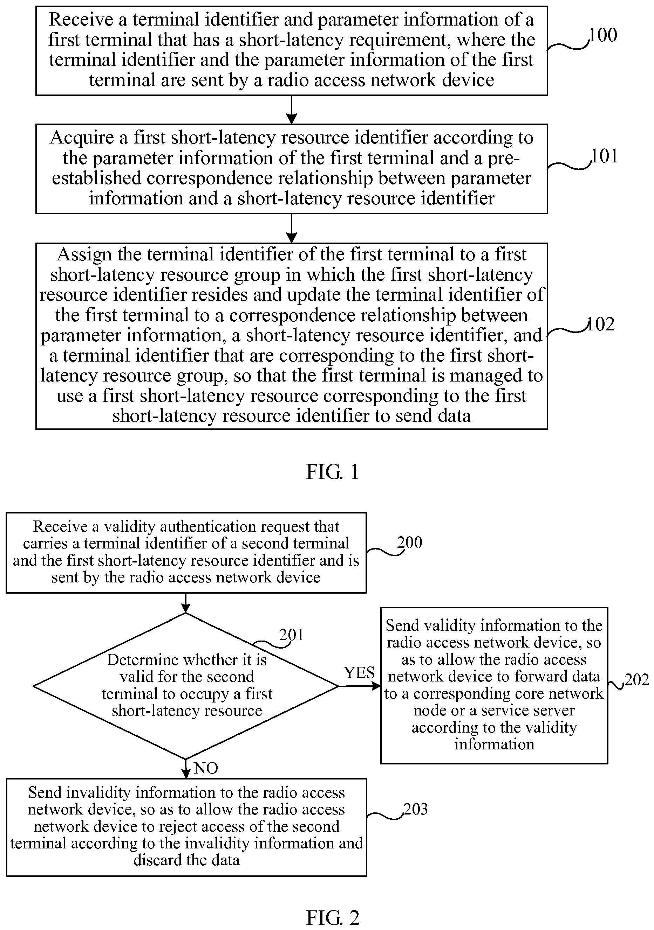

FIG. 1 is a flowchart of a short-latency resource management method according to an embodiment of the present invention. The short-latency resource management method in this embodiment is executed by a short-latency resource management device. As shown in FIG. 1, the short-latency resource management method in this embodiment may include:
100. Receive a terminal identifier and parameter information of a first terminal that has a short-latency requirement, where the terminal identifier and the parameter information of the first terminal are sent by a radio access network device.
101. Acquire a first short-latency resource identifier according to the parameter information of the first terminal and a pre-established correspondence relationship between parameter information and a short-latency resource identifier.

The first short-latency resource identifier is a short-latency resource identifier matching the first terminal.

102. Assign the terminal identifier of the first terminal to a first short-latency resource group to which the first short-latency resource identifier belongs and update the terminal identifier of the first terminal into a correspondence relationship between parameter information, a short-latency resource identifier, and a terminal identifier that are corresponding to the first short-latency resource group, so that the first terminal is managed to use a first short-latency resource corresponding to the first short-latency resource identifier to send data.

For example, in this embodiment, the short-latency resource management device and the radio access network device communicate with each other to implement management and maintenance of the short-latency resource. The radio access network device in this embodiment may be a base station or may further include a base station controller. In this embodiment, the correspondence relationship between the parameter information and the short-latency resource identifier has been stored in the short-latency resource management device. Therefore, the short-latency resource identifier matching the first terminal, that is the first short-latency resource identifier, can be acquired according to the parameter information of the first terminal and according to the current parameter information of the first terminal and the correspondence relationship that is between the parameter information and the short-latency resource identifier and has been stored in the short-latency resource management device. Then, the short-latency resource management device may establish a correspondence relationship between the terminal identifier of the first terminal and the first short-latency resource identifier matching the first terminal, thereby implementing management for the short-latency resource corresponding to the first short-latency resource identifier.

An application scenario in this embodiment is as follows: In M2M communication, a short-latency resource management device is used to receive a terminal identifier and parameter information of a first terminal has a short-latency requirement, where the terminal identifier and the parameter information of the first terminal are sent by a radio access network device; a first short-latency resource identifier is acquired according to the parameter information of the first terminal and a correspondence relationship between parameter information and a short-latency resource identifier; and a correspondence relationship between the terminal identifier of the first terminal and the first short-latency resource identifier is established, so that a short-latency resource corresponding to the first short-latency resource identifier is managed.

According to a short-latency resource management method in this embodiment, a terminal identifier and parameter information of a first terminal that has a short-latency requirement are received, where the terminal identifier and the parameter information of the first terminal are sent by a radio access network device; a first short-latency resource identifier is acquired according to the parameter information of the first terminal and a pre-established correspondence relationship between parameter information and a short-latency resource identifier; and the terminal identifier of the first terminal is assigned to a first short-latency resource group to which the first short-latency resource identifier belongs, and the terminal identifier of the first terminal is updated into a correspondence relationship between parameter information, a short-latency resource identifier, and a terminal identifier that are corresponding to the first short-latency resource group, so that the first terminal is managed to use a short-latency resource corresponding to the first short-latency resource identifier to send data. The short-latency resource can be managed by using the technical solution in this embodiment, so that subsequent maintenance of the short-latency resource is facilitated and usage efficiency of the short-latency resource can be effectively improved.

It should be noted that the short-latency resource in the embodiment of the present invention may be, for example, a time-and-frequency resource or a code resource. For example, the short-latency resource may be a time-and-frequency resource in an LTE network or may also be a coding resource in a UMTS system.

Optionally, based on the technical solution in the foregoing embodiment, the method may further include the following:

The first short-latency resource identifier is sent to the first terminal by using the radio access network device, so as to allow the first terminal to send data over the first short-latency resource corresponding to the first short-latency resource identifier.

Optionally, based on the technical solution in the foregoing embodiment, the parameter information of the first terminal may include, for example, any one or more of the following: a destination node address, a latency parameter, the maximum number of retransmission times, quality of service, and a service type that are corresponding to short-latency communication performed by the first terminal.

Optionally, based on the technical solution in the foregoing embodiment, before 100, the method may further include the following content:
(a) Receive a terminal identifier and parameter information of at least one terminal and at least one short-latency resource identifier that are sent by the radio access network device.
   The at least one short-latency resource identifier is a short-latency resource identifier corresponding to at least one short-latency resource allocated to the at least one terminal by the radio access network device, and the at least one terminal here has the short-latency requirement. For example, a relationship between the at least one terminal here and the at least one short-latency resource identifier may include a one-to-one correspondence relationship, that is, one terminal is corresponding to one short-latency resource, that is, corresponding to one short-latency resource identifier. The relationship between the at least one terminal and the at least one short-latency resource identifier may include a one-to-many relationship, that is, one terminal is corresponding to multiple short-latency resources, that is, corresponding to multiple second short-latency resource identifiers. The relationship between the at least one terminal and the at least one short-latency resource identifier may include a many-to-one relationship, that is, multiple terminals are corresponding to one short-latency resource, that is, corresponding to one short-latency resource identifier. The at least one terminal in this embodiment may include or may not include the first terminal in the foregoing embodiment.
(b) Group the at least one short-latency resource identifier according to the parameter information of the at least one terminal, so as to obtain at least one short-latency resource group.
   The at least one short-latency resource group in this embodiment includes the first short-latency resource group. The short-latency resource group obtained in this embodiment is corresponding to the parameter information that assigns the short-latency resource group in a one-to-one manner.
(c) Assign a terminal identifier of each terminal in the terminal identifier of the at least one terminal to a short-latency resource group to which the short-latency resource identifier corresponding to the terminal identifier of the terminal belongs and update the at least one short-latency resource group.
   For example, according to the grouping in (b), each short-latency resource group may include a group of short-latency resource identifiers, where the group of the short-latency resource identifiers includes one or more short-latency resource identifiers. Further, it can be known according to (a) that a group of short-latency resource identifiers in each short-latency resource group are corresponding to one or more terminal identifiers. In step (c), the terminal identifiers corresponding to the short-latency resource identifiers in the short-latency resource group are assigned to the short-latency resource group. In this case, the short-latency resource group not only includes a group of short-latency resource identifiers, but also includes a group of terminal identifiers, where the group of terminal identifiers includes one or more terminal identifiers.
(d) Establish at least one correspondence relationship between parameter information, a short-latency resource identifier, and a terminal identifier according to the at least one updated short-latency resource group.

Each short-latency resource group is corresponding to a piece of parameter information. In this embodiment, the at least one correspondence relationship between the parameter information, the short-latency resource identifier, and the terminal identifier is corresponding to at least one short-latency resource group in a one-to-one manner. For example, each short-latency resource group is corresponding to one piece of determined parameter information; in the short-latency resource group, at least one short-latency resource identifier may be included; and it can be known from the foregoing (a) that the at least one short-latency resource identifier is corresponding to the at least one terminal identifier. Therefore, a determined correspondence relationship may be established according to the parameter information of the short-latency resource group, the short-latency resource identifier included in the short-latency resource group, and the terminal identifier included in the short-latency resource group.

The parameter information in this embodiment is also any one or more of the following: the destination node address, the latency parameter, the maximum number of retransmission times, the quality of service, and the service type.

An application scenario of the solution may be as follows: The short-latency resource management device works for the first time. Firstly, the short-latency resource management device receives a terminal identifier of at least one terminal sent by a radio access network device and a short-latency resource identifier corresponding to the short-latency resource allocated to the at least one terminal by the radio access network device; and then a short-latency resource management entity may group the at least one short-latency resource identifier according to parameter information of the at least one terminal. In this case, a correspondence relationship between the parameter information and the short-latency resource identifier and at least one short-latency resource group can be obtained. In this way, in 101 in the foregoing embodiment, a first short-latency resource identifier corresponding to the first terminal may be acquired according to the parameter information of the first terminal and the correspondence relationship between the parameter information and the short-latency resource identifier. Here, one or more first short-latency resource identifiers corresponding to the first terminal may exist.

It should be noted that selected parameter information must be the same when the at least one short-latency resource identifier is grouped according to the parameter information. For example, when the destination node address in the parameter information is selected to group the at least one short-latency resource identifier, the at least one short-latency resource identifier with the same destination node address is grouped into a group. A condition where the at least one short-latency resource is grouped according to parameter information of another type, such as the maximum number of retransmission times, does not exist.

For example, the short-latency resource management device receives the following groups of information sent by the radio access network device:
The terminal identifier is UE1, the corresponding short-latency resource identifier is 1, and the corresponding latency parameter is 2 ms;
The terminal identifier is UE2, the corresponding short-latency resource identifier is 3, and the corresponding latency parameter is 3 ms;
The terminal identifier is UE3, the corresponding short-latency resource identifier is 2, and the corresponding latency parameter is 2 ms;
The terminal identifier is UE4, the corresponding short-latency resource identifier is 4, and the corresponding latency parameter is 4 ms;
The terminal identifier is UE5, the corresponding short-latency resource identifier is 5, and the corresponding latency parameter is 3 ms.

For the foregoing groups of information, when the short-latency resource management device groups short-latency resources according to the foregoing information, because the parameter information of the UE includes only the latency parameter, the short-latency resource management device can only perform grouping according to the latency parameter. In this case, three short-latency resource groups may be divided, where the one whose short-latency parameter is equal to 2 ms serves as a first short-latency resource group, the one whose short-latency parameter is equal to 3 ms serves as a second short-latency resource group, and the one whose short-latency parameter is equal to 4 ms serves as a third short-latency resource group. The first short-latency resource group includes: short-latency resource identifiers 1 and 2, and terminal identifiers UE1 and UE3. According to the first short-latency resource group, a correspondence relationship between the short-latency parameter 2 ms, the short-latency resource identifiers 1 and 2, and the terminal identifiers UE1 and UE3 may be obtained. In this case, terminals corresponding to UE1 and UE3 may use short-latency resources corresponding to the short-latency resource identifiers 1 and 2 to send data. Conditions of the second short-latency resource group and the third short-latency resource group are similar and therefore no further details are provided.

It is assumed that on the foregoing basis, in the received information, a destination node address corresponding to terminal identifiers UE1, UE3, and UE5 is A; a destination node address corresponding to terminal identifiers UE2 and UE4 is B; and the terminal identifier UE1 has the corresponding maximum number of retransmission times.

Therefore, only the terminal identifier UE1 has the corresponding maximum number of retransmission times, and the maximum number of retransmission times corresponding to other UEs are uncertain. Therefore, the maximum number of retransmission times is not taken into consideration when the short-latency resources are grouped. In this case, short-latency parameter+destination node address may still be used as the parameter information to divide the short-latency resource groups. In this case, four short-latency resource groups are formed. The parameter information of the first short-latency resource group is as follows: short-latency parameter 2 ms+destination node address A. The first short-latency resource group includes: the short-latency resource identifiers 1 and 2, and the terminal identifiers UE1 and UE3. According to the first short-latency resource group, a correspondence relationship between the short-latency parameter 2 ms+destination node address A, the short-latency resource identifiers 1 and 2, and the terminal identifiers UE1 and UE3 may be obtained. In this case, terminals corresponding to UE1 and UE3 may use short-latency resources corresponding to the short-latency resource identifiers 1 and 2 to send data. The parameter information of the second short-latency resource group is as follows: short-latency parameter 3 ms+destination node address A. The second short-latency resource group includes: the short-latency resource identifier 5, and the terminal identifier UE5. According to the second short-latency resource group, a correspondence relationship between the short-latency parameter 3 ms+destination node address A, the short-latency resource identifier 5, and the terminal identifier UE5 may be obtained. Likewise, the parameter information of the third short-latency resource group is as follows: short-latency parameter 3 ms+destination node address B. The parameter information of the fourth short-latency resource group is as follows: short-latency parameter 4 ms+destination node address B. In an actual application, grouping may be performed specifically according to the parameter information that is corresponding to the at least one terminal and sent by a radio network device. The foregoing conditions are only examples and do not limit any content claimed in claims.

Optionally, based on at least one short-latency resource group obtained in the foregoing embodiment, 101 may specifically use the following content:
(1) Determine, according to the parameter information of the first terminal, whether a short-latency resource group matching the first terminal exists in the at least one short-latency resource group; when the short-latency resource group matching the first terminal exists in the at least one short-latency resource group, perform (2); otherwise, when the short-latency resource group matching the first terminal does not exist in the at least one short-latency resource group, perform (3).
   For example, in this embodiment, the determining, according to the parameter information of the first terminal, whether a short-latency resource group matching the first terminal exists in the at least one short-latency resource group whether a short-latency resource group that is grouped according to the parameter information of the first terminal exists in the at least one short-latency resource group; if exists, determine that the short-latency resource group matching the first terminal exists; otherwise, determine that no short-latency resource group matching the first terminal exists.
(2) Further determine whether a short-latency resource that is corresponding to the short-latency resource group matching the first terminal is capable of meeting a requirement of quality of service of all corresponding terminals after the terminal identifier of the first terminal is assigned to the short-latency resource group matching the first terminal; after the terminal identifier of the first terminal is assigned to the short-latency resource group matching the first terminal, if the short-latency resource that is corresponding to the short-latency resource group matching the first terminal is capable of meeting the requirement of the quality of service of all corresponding terminals, perform (4); otherwise, after the terminal identifier of the first terminal is assigned to the short-latency resource group matching the first terminal, if the short-latency resource that is corresponding to the short-latency resource group matching the first terminal is incapable of meeting the requirement of the quality of service of all corresponding terminals, perform (5).
   For example, in this embodiment, "determining whether a short-latency resource that is corresponding to the short-latency resource group matching the first terminal is capable of meeting a requirement of quality of service of all corresponding terminals after the terminal identifier of the first terminal is assigned to the short-latency resource group matching the first terminal" may specifically include: determining, by using a function T = tN/n, whether the short-latency resource that is corresponding to the short-latency resource group matching the first terminal is capable of meeting the requirement of the quality of service of all corresponding terminals after the terminal identifier of the first terminal is assigned to the short-latency resource group matching the first terminal, where n indicates the number of users that have a short-latency communication requirement and are correspondingly supported by a resource group, N indicates the number of short-latency resources in the short-latency resource group matching the first terminal, t indicates the latency parameter; when a ≤ T, determining that the short-latency resource that is corresponding to the short-latency resource group matching the first terminal is still capable of meeting the requirement of the quality of service of all corresponding terminals after the terminal identifier of the first terminal is assigned to the short-latency resource group matching the first terminal; and when T < a, determining that the short-latency resource that is corresponding to the short-latency resource group matching the first terminal is incapable of meeting the requirement of the quality of service of all corresponding terminals after the terminal identifier of the first terminal is assigned to the short-latency resource group matching the first terminal, where a is a threshold and the value of a may be set according to an actual condition. Because the short-latency resource group matching the first terminal includes some corresponding short-latency resource identifiers and the short-latency resource group matching the first terminal further includes terminal identifiers corresponding to these corresponding short-latency resource identifiers, the foregoing "all corresponding terminals" refer to terminals corresponding to all terminal identifiers included in the short-latency resource group matching the first terminal.
   Optionally, the function T = tN/n may further detect a condition where relatively many resources exist in a short-latency resource group but the number of terminals is relatively small. In this case, the short-latency resource management device may instruct a radio access network terminal to release a part of resources for other short-latency resource groups to use. For example, a threshold b may be set again for implementation. For example, when a ≤ T ≤ b and if it is determined that the short-latency resource that is corresponding to the short-latency resource group matching the first terminal is capable of meeting the requirement of the quality of service of all corresponding terminals after the terminal identifier of the first terminal is assigned to the short-latency resource group matching the first terminal, the short-latency resource does not need to be adjusted. When T < a and if it is determined that the short-latency resource that is corresponding to the short-latency resource group matching the first terminal is incapable of meeting the requirement of the quality of service of all corresponding terminals after the terminal identifier of the first terminal is assigned to the short-latency resource group matching the first terminal, it is necessary to increase the number of short-latency resources or decrease the number of terminals to meet the requirement of the quality of service of short-latency communication. When T > b and it is determined that the number of short-latency resources used for the short-latency communication is too large in the short-latency resource group matching the first terminal, a part of the short-latency resources may be released.
(3) Send a short-latency resource assignment request that carries the terminal identifier of the first terminal to the radio access network device, so as to request the radio access network device to assign the short-latency resource for the first terminal; receive a third short-latency resource identifier sent by the radio access network device, where the third short-latency resource identifier is a short-latency resource identifier corresponding to the short-latency resource allocated to the first terminal by the radio access network device; and use the third short-latency resource identifier as the first short-latency resource identifier matching the first terminal.
   After (3) is performed, the first short-latency resource identifier matching the first terminal exists in the short-latency resource management device. Further, corresponding parameter information may be configured for the first short-latency resource identifier. In this way, if a subsequently added terminal that has a short-latency requirement has the same parameter information as the first terminal, the newly added terminal may also correspond to the first short-latency resource identifier, that is, it may share the first short-latency resource corresponding to the first short-latency resource identifier. The parameter information may be any one or more of the following: the destination node address, the latency parameter, the maximum number of retransmission times, the quality of service, the service type, and the like of the first terminal.
(4) Use the short-latency resource identifier corresponding to the short-latency resource group as the first short-latency resource identifier matching a terminal, so as to use the short-latency resource corresponding to the first short-latency resource identifier as the short-latency resource of the first terminal.
   In this embodiment, one or more short-latency identifiers corresponding to each short-latency resource group may exist.
(5) Send the short-latency resource assignment request that carries the terminal identifier of the first terminal to the radio access network device, so as to request the radio access network device to assign the short-latency resource for the first terminal; receive a second short-latency resource identifier sent by the radio access network device, where the second short-latency resource identifier is the short-latency resource identifier corresponding to the short-latency resource allocated to the first terminal by the radio access network device; add the second short-latency resource identifier to the short-latency resource group matching the first terminal; and use the short-latency resource identifier that is corresponding to the short-latency resource group matching the first terminal as the first short-latency resource identifier, so as to use the short-latency resource corresponding to the first short-latency resource identifier as the short-latency resource of the first terminal.

In this embodiment, the short-latency resource group matching the first terminal is corresponding to at least one short-latency resource identifier before the second short-latency resource identifier is added to the short-latency resource group matching the first terminal. The second short-latency resource identifier is added to the short-latency resource group matching the first terminal. A second short-latency resource identifier is also added to the short-latency resource identifier that is corresponding to the short-latency resource group matching the first terminal. Then, all short-latency resource identifiers that are corresponding to the short-latency resource group matching the first terminal and to which the second short-latency resource identifier is added are used as the first short-latency resource identifiers matching the first terminal.

For example, if the first terminal matches the first short-latency resource group, the first short-latency resource group includes three short-latency resource identifiers A, B, and C (corresponding to three short-latency resources). However, after the first terminal is added to the first short-latency resource group, the requirement of the quality of service of all terminals corresponding to the first short-latency resource group cannot be met. In this case, the first terminal requests the radio access network device to allocate the short-latency resource to the first terminal. For example, the radio access network device allocates a new short-latency resource to the first terminal, identifies the new short-latency resource as a short-latency resource identifier D, and sends the short-latency resource identifier D to the short-latency resource management device. In this case, the short-latency resource management device adds the short-latency resource identifier D to the first short-latency resource group. After the adding, the first short-latency resource group is corresponding to four short-latency resource identifiers A, B, C, and D. Therefore, the first short-latency resource identifiers corresponding to the first terminal are short-latency resource identifiers A, B, C, and D.

Optionally, the short-latency resource management device does not need to add the short-latency resource identifier D to the first short-latency resource group, but groups it into a another group. For example, the newly added short-latency resource identifier is grouped into an x^{th} short-latency resource group. The x^{th} short-latency resource group includes only the short-latency resource identifier D and the first terminal is corresponding to the short-latency resource identifier D. The first terminal is notified, by using the base station, that the short-latency resource identifier corresponding to the first terminal is D.

FIG. 2 is a flowchart of a short-latency resource management method according to another embodiment of the present invention. As shown in FIG. 2, based on the foregoing embodiment, the short-latency resource management method in this embodiment may further include the following content:
200. Receive a validity authentication request that carries a terminal identifier of a second terminal and the first short-latency resource identifier and is sent by the radio access network device.

The validity authentication request in this embodiment is sent by the radio access network device according to data that carries the terminal identifier of the second terminal, is sent by the second terminal, and is received over a first short-latency resource.

201. Determine whether it is valid for the second terminal to occupy the first short-latency resource; if valid, perform 202; otherwise, if invalid, perform 203.

For example, the determining whether it is valid for the second terminal to occupy the first short-latency resource may specifically include the following content: Determine, according to the correspondence relationship between the parameter information, the short-latency resource identifier, and the terminal identifier that are corresponding to the first short-latency resource group, whether the terminal identifier of the second terminal is corresponding to the first short-latency resource identifier corresponding to the first short-latency resource; if correspond, determine that it is valid for the second terminal to occupy the first short-latency resource is valid; otherwise, determine that it is invalid for the second terminal to occupy the first short-latency resource.

202. Send validity information to the radio access network device, so as to allow the radio access network device to forward data to a corresponding core network node or a service server according to the validity information.

The service server is a server corresponding to a destination node in short-latency communication performed by the second terminal.

203. Send invalidity information to the radio access network device, so as to allow the radio access network device to reject access of the second terminal according to the invalidity information and discard the data.

According to the short-latency resource management method in this embodiment, validity of occupancy of a short-latency resource by a terminal can be detected by using the foregoing technical solution, thereby ensuring security and effectiveness of usage of the short-latency resource in M2M communication and improving M2M communication efficiency.

Optionally, based on the technical solution in the foregoing embodiment, when it is determined that it is valid for the second terminal to occupy a first short-latency resource in 201, the method may further include the following content:
(a) Update the number of times that the first short-latency resource is invalidly occupied.
   For example, a counter can be set in a short-latency resource management device. The counter is used to record the number of times that the first short-latency resource is invalidly occupied. Each time the first short-latency resource is invalidly occupied, the numerical value recorded by the counter increases by 1.
(b) When the number of times reaches a preset threshold, send an update request that carries the first short-latency resource identifier to the radio access network device, so as to request the radio access network device to update the first short-latency resource.

When the number of times that the first short-latency resource is invalidly occupied reaches the preset threshold, the short-latency resource management device sends the update request that carries the first short-latency resource identifier to the radio access network device, so as to request the radio access network device to update the first short-latency resource. Then, further optionally, the short-latency resource management device may clear the recorded number of times that the first short-latency resource is invalidly occupied, so as to record again, after the first short-latency resource is updated, the number of times that the first short-latency resource is invalidly occupied.

According to the short-latency resource management method in this embodiment, a short-latency resource can be managed effectively by using the foregoing technical solution, so as to prevent invalid occupancy of the short-latency resource; furthermore, when the number of times that the short-latency resource is invalidly occupied exceeds a threshold, updating and maintenance of the short-latency resource can be implemented. Therefore, the short-latency resource can be effectively managed and maintained by using the technical solution in this embodiment, thereby effectively improving usage efficiency of the short-latency resource.

Optionally, based on the embodiment illustrated in FIG. 1 or FIG. 2, the method may further include the following:
(1) Receive a query request that carries the first short-latency resource identifier and is sent by the radio access network device.
(2) Acquire, according to the correspondence relationship between the parameter information, the short-latency resource identifier, and the terminal identifier that are corresponding to the first short-latency resource group, at least one terminal identifier corresponding to the first short-latency resource identifier.
   The at least one terminal identifier in this embodiment includes the foregoing terminal identifier of the first terminal.
(3) Send the acquired at least one terminal identifier corresponding to the first short-latency resource identifier to the radio access network device.

The terminal using the short-latency resource can be queried by using the technical solution, so that subsequent management of the short-latency resource is facilitated.

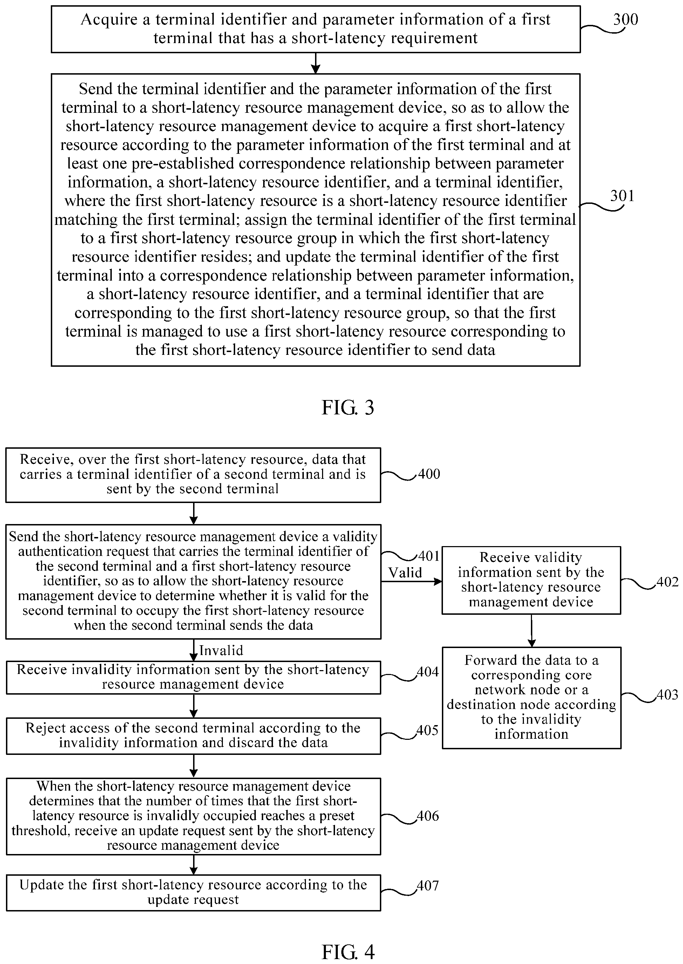

FIG. 3 is a flowchart of a short-latency resource management method according to still another embodiment of the present invention. The short-latency resource management method in this embodiment is executed by a radio access network device. For example, the radio access network device may be a base station or may include a base station controller. As shown in FIG. 3, the resource management method in this embodiment may specifically include the following:
300. Acquire a terminal identifier and parameter information of a first terminal that has a short-latency requirement.
301. Send the terminal identifier and the parameter information of the first terminal to a short-latency resource management device, so as to allow the short-latency resource management device to acquire a first short-latency resource according to the parameter information of the first terminal and at least one pre-established correspondence relationship between parameter information, a short-latency resource identifier, and a terminal identifier, where the first short-latency resource is a short-latency resource identifier matching the first terminal; assign the terminal identifier of the first terminal to a first short-latency resource group to which the first short-latency resource identifier belongs; and update the terminal identifier of the first terminal into a correspondence relationship between parameter information, a short-latency resource identifier, and a terminal identifier that are corresponding to the first short-latency resource group, so that the first terminal is managed to use a first short-latency resource corresponding to the first short-latency resource identifier to send data.

This embodiment differs from the embodiment illustrated in FIG. 1 only in that the technical solution of the present invention is described on the radio access network device side in this embodiment. A specific implementation process of the technical solution in this embodiment is similar to that in the embodiment illustrated in FIG. 1. For details, reference may be made to the record of the embodiment illustrated in FIG. 1, and therefore no further details are provided herein.

According to the short-latency resource management method in this embodiment, a short-latency resource can be managed by using the foregoing technical solution, so that subsequent maintenance of the short-latency resource is facilitated and usage efficiency of the short-latency resource can be effectively improved.

Optionally, based on the technical solution in the foregoing embodiment, the parameter information of the first terminal may include, for example, any one or more of the following: a destination node address, a latency parameter, the maximum number of retransmission times, quality of service, and a service type that are corresponding to short-latency communication performed by the first terminal.

Optionally, in the technical solution in the foregoing embodiment, the acquiring a terminal identifier and parameter information of a first terminal that has a short-latency requirement in 300 may specifically include the following manner: Acquire the terminal identifier and the parameter information of the first terminal from the first terminal, a core network device, or a service server, where the service server is a server corresponding to a destination node address of short-latency communication performed by the first terminal.

For example, in an actual application, the radio access network device may broadcast, by using a system message, an indication for supporting a short-latency communication service in a current cell, and after receiving the indication, a valid terminal that has an uplink short-latency communication requirement notifies information of uplink short-latency communication requirement/capability owned by the terminal to the radio access network device during power-on or access; or the radio access network device interacts with a core network (Core Network; CN for short below) node or the service server (Server) after receiving the uplink short-latency communication requirement information of the terminal, determines that the terminal is a valid user that has an uplink short-latency communication requirement/capability, obtains other parameter information of uplink short-latency communication of the terminal, including parameter information, such as the destination node address, a latency requirement, the maximum number of retransmission times, the quality of service, and the service type, and stores an identifier (ID) and parameter information of the terminal. The radio access network device needs to store all parameter information of the terminal for subsequent usage when data reported by the terminal needs to be forwarded. However, the parameter information of the terminal sent by the radio access network terminal to the short-latency resource management device may be one or more pieces of all parameter information. Specifically, which piece of parameter information is sent to the short-latency resource management device is determined according to parameter information according to which the short-latency resource management device groups a received short-latency resource identifier.

In an actual application, the radio access network device may not broadcast whether the short-latency communication service is supported in the current cell, but queries whether the terminal has the short-latency communication requirement/capability in the process of establishing a connection with the terminal. In the process of power-on or connection establishment, the terminal receives information that the radio access network device queries whether the current terminal has the short-latency communication capability/requirement; after receiving the query, the terminal notifies information about the uplink short-latency communication requirement/capability owned by the terminal to the radio access network device. The radio access network device interacts with the CN node/Server after receiving the information related to the uplink short-latency communication requirement/capability of the terminal, determines that the terminal is a valid user that has the short-latency communication requirement/capability, obtains other parameter information of short-latency communication of the terminal, including parameter information, such as the destination node address, the latency requirement, the maximum number of retransmission times, the quality of service, and the service type, and stores the terminal identifier and all the parameter information.

Optionally, in an actual application, the radio access network device may neither broadcast whether the short-latency communication service is supported in the current cell, nor query whether the terminal has the short-latency communication requirement/capability. Instead, after the connection is established, the radio access network device obtains all information related to the short-latency communication capability/requirement of the terminal from the CN node/Server node and stores the information.

Optionally, in an actual application, the radio access network device may also obtain, from the terminal, all information related to the short-latency communication capability/requirement owned by the terminal and stores the information.

Optionally, based on the foregoing embodiment, after 301, the method may further include the following content:
(1) Receive the first short-latency resource identifier that matches the first terminal and is sent by the short-latency resource management device.
(2) Send the first short-latency resource identifier to the first terminal, so as to allow the first terminal to send data over the first short-latency resource corresponding to the first short-latency resource identifier.

Optionally, reference may be made to the record of the embodiment of the resource management method on the short-latency resource management device side. When no short-latency resource group matching the first terminal exists in at least one short-latency resource group stored in the short-latency resource management device, or when a short-latency resource group matching the first terminal exists in at least one short-latency resource group stored in the short-latency resource management device, but the short-latency resource group currently matching the first terminal is incapable of meeting a requirement of a terminal corresponding to the short-latency resource group after a first terminal is added, the short-latency resource management device sends the radio access network device a short-latency resource assignment request that carries the terminal identifier of the first terminal. Correspondingly, on the radio access network device side, the method may further include the following content:
(a) Receive the resource assignment request that carries the terminal identifier of the first terminal and is sent by the short-latency resource management device.
(b) Allocate a second short-latency resource to the first terminal according to the resource assignment request.
   For example, when the radio access network device allocates the second short-latency resource to the first terminal according to the resource assignment request, a current resource allocation condition and a current condition of a terminal accessing the current radio access network device also need to be considered. For details, reference may be made to the record of resource assignment to the terminal by the radio access network device in the prior art, and therefore no further details are provided herein.
(c) Send a second short-latency resource identifier corresponding to the second short-latency resource to the short-latency resource management device.

FIG. 4 is a flowchart of a short-latency resource management method according to still another embodiment of the present invention. As shown in FIG. 4, based on FIG. 3 and all optional extended embodiments, the short-latency resource management method in this embodiment may further include the following content:
400. Receive, over the first short-latency resource, data that carries a terminal identifier of a second terminal and is sent by the second terminal.
401. Send the short-latency resource management device a validity authentication request that carries the terminal identifier of the second terminal and a first short-latency resource identifier, so as to allow the short-latency resource management device to determine whether it is valid for the second terminal to occupy the first short-latency resource when the second terminal sends the data.

Optionally, when the short-latency resource management device determines that it is valid for the second terminal to occupy the first short-latency resource when the second terminal sends the data, after 401, the method may further include the following:
402. Receive validity information sent by the short-latency resource management device.
403. Forward the data to a corresponding core network node or a destination node according to the validity information.

Optionally, when the short-latency resource management device determines that it is invalid for the second terminal to occupy a first short-latency resource when the first terminal sends the data, after 401, the method may further include the following:
404. Receive invalidity information sent by the short-latency resource management device.
405. Reject access of the second terminal according to the invalidity information and discard the data.

Optionally, after 405 in the foregoing embodiment, the method may further include the following:
406. When the short-latency resource management device determines that the number of times that the first short-latency resource is invalidly occupied reaches a preset threshold, receive an update request sent by the short-latency resource management device.

The update request carries the first short-latency resource identifier.

After step 405 and before 406, the method may include: Determine whether the number of times that the first short-latency resource is invalidly occupied reaches the preset threshold; and when the number of times that the first short-latency resource is invalidly occupied does not reach the preset threshold, perform no operation.

407. Update the first short-latency resource according to the update request.

For the updating, by the radio access network device, the first short-latency resource, the updating may be performed according to a related manner in which a common physical resource is updated in the prior art. For example, a current time-and-frequency parameter or a code parameter is adjusted.

Optionally, after updating the first short-latency resource, the radio access network device also needs to instruct at least one terminal using the first short-latency resource to update resource parameter information corresponding to the first short-latency resource, so as to ensure that the at least one terminal using the first short-latency resource is capable of using a correct short-latency resource to send data. Therefore, based on the technical solution, optionally, the method may further include the following content:
(A) Send a query request to the short-latency resource management device.
   The query request carries the first short-latency resource identifier, and the query request is used for the short-latency resource management device to query a terminal identifier of the at least one terminal corresponding to the first short-latency resource identifier, where the at least one terminal may include the foregoing first terminal.
(B) Receive the terminal identifier of the at least one terminal corresponding to the first short-latency resource identifier, where the terminal identifier is sent by the short-latency resource management device.
   The radio access network device may acquire all terminal identifiers of the at least one terminal corresponding to the first short-latency resource identifier by using the foregoing solution, where the terminal identifiers are recorded in the short-latency resource management device.
   Then, optionally, the short-latency resource management method in this embodiment may further include the following:
(C) Send an update parameter to the at least one terminal according to the terminal identifier of the at least one terminal.

The update parameter is an update parameter for updating the first short-latency resource corresponding to the first short-latency resource identifier, and the update parameter is used for the at least one terminal to update stored resource parameter information of the first short-latency resource according to the update parameter.

For example, when first short-latency resources before the updating are A, B, and C, and update parameters are A, B, C, and D, after the at least one terminal receives the update parameters, the update parameters recorded by the at least one terminal are updated from A, B, and C to A, B, C, and D according to the update parameters.

According to the short-latency resource management method in this embodiment, a short-latency resource can be managed by using the foregoing technical solution, so that subsequent maintenance of the short-latency resource is facilitated and usage efficiency of the short-latency resource can be effectively improved.

It should be noted that the sending, by the radio access network device, an update parameter to the at least one terminal according to the terminal identifier of the at least one terminal in (C) in the foregoing embodiment may specifically be that the update parameter is sent to the at least one terminal by using an encryption manner, where the encryption manner may be predetermined in a connection establishment process or notified by the radio access network device to the terminal.

Optionally, based on the technical solution in the foregoing embodiment, steps (A) to (C) may be replaced by using the following solution: The radio access network device broadcasts the first short-latency resource identifier and the update parameter for updating the first short-latency resource, so as to allow the at least one terminal using the first short-latency resource to update the stored resource parameter information of the first short-latency resource according to the update parameter.

For example, after receiving the first short-latency resource identifier, the at least one terminal using the first short-latency resource first determines whether the first short-latency resource identifier is a short-latency resource identifier used by the terminal, and, if yes, determines that the terminal needs to update the resource parameter information of the short-latency resource. In this case, the at least one terminal using the first short-latency resource receives the update parameter for updating the first short-latency resource and updates the stored resource parameter information of the first short-latency resource according to the update parameter, so as to report data over a correct first short-latency resource subsequently. Likewise, the radio access network device may also use the encryption manner to broadcast the update parameter for updating the first short-latency resource.

Optionally, based on the technical solution of the foregoing embodiment, steps (A) to (C) may further be replaced by using the following solution:
(a) The radio access network device broadcasts the first short-latency resource identifier, so as to allow the at least one terminal using the first short-latency resource to determine, according to the received first short-latency resource identifier, that the stored resource parameter information of the first short-latency resource needs to be updated.
(b) The radio access network device receives an update request sent by the at least one terminal using the first short-latency resource, where the update request carries the first short-latency resource identifier.
(c) The radio access network device sends, according to the update request, the at least one terminal using the first short-latency resource the update parameter for updating the first short-latency resource, so as to allow the at least one terminal using the first short-latency resource to update the stored resource parameter information of the first short-latency resource according to the update parameter

In the technical solution in this embodiment, the radio access network device first broadcasts the first short-latency resource identifier, and, after the at least one terminal using the first short-latency resource receives the first short-latency resource identifier, determines that the resource parameter information of the first short-latency resource needs to be updated. In this case, the at least one terminal initiates, to the radio access network device, the update request that carries the first short-latency resource identifier. After receiving the update request, the radio access network device sends, to the at least one terminal that initiates the update request, the update parameter for updating the first short-latency resource. In this way, after receiving the update parameter, the at least one terminal that initiates the update request can update the stored resource parameter information of the first short-latency resource according to the update parameter, so as to report data over a correct first short-latency resource subsequently. Likewise, the radio access network device may also use the encryption manner to send, according to the update request, the at least one terminal using the first short-latency resource the update parameter for updating the first short-latency resource.

Optionally, the radio access network device may further set a resource update period. In one resource update period, the radio access network device updates the short-latency resource once. In this case, the update request triggering condition in 406 may be replaced with determining that a current update period starts or ends. Then, the radio access network device updates the short-latency resource according to a preset update manner. Subsequently, the manner (A)-(C) may also be used to send the update parameter to the terminal by using a base station. The two optional manners may also be used to send the update parameter to the terminal. For details, reference may be made to the record of the foregoing related embodiment, and therefore no further details are provided herein.

In an actual application, a method in which a common physical resource is updated in the prior art may also be used to send the short-latency update parameter to the terminal, so as to allow the terminal to update short-latency resource information. For details, reference may be made to the record of the prior art, and therefore no further details are provided herein.

It should be noted that "first", "second", and "third" in the method embodiments are only used to describe the technical solution of the present invention, but do not impose any limitation to the technical names following them.

Persons of ordinary skill in the art may understand that all or a part of the steps of the foregoing method embodiments may be implemented by a program instructing relevant hardware. The foregoing program may be stored in a computer readable storage medium. When the program runs, the steps of the foregoing method embodiments are performed. The foregoing storage medium includes any medium capable of storing program code, such as a ROM, a RAM, a magnetic disk, or an optical disc.

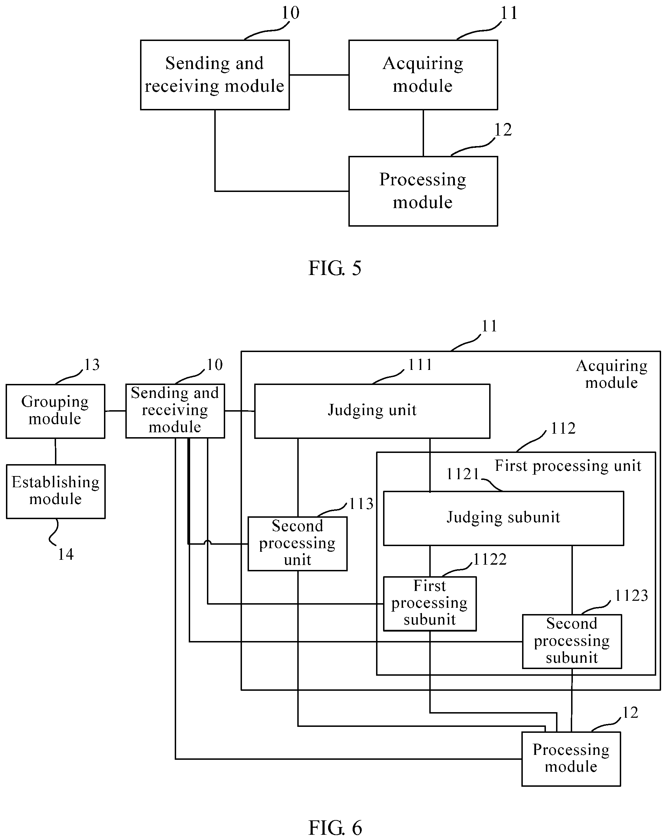

FIG. 5 is a schematic structural diagram of a short-latency resource management device according to an embodiment of the present invention. As shown in FIG. 5, the short-latency resource management device in this embodiment may specifically include: a sending and receiving module 10, an acquiring module 11, and a processing module 12.

The sending and receiving module 10 is configured to receive a terminal identifier and parameter information of a first terminal that has a short-latency requirement, where the terminal identifier and the parameter information of the first terminal are sent by a radio access network device. The acquiring module 11 connects to the sending and receiving module 10. The acquiring module 11 is configured to acquire a first short-latency resource identifier according to the parameter information of the first terminal received by the sending and receiving module 10 and at least one pre-established correspondence relationship between parameter information, a short-latency resource identifier, and a terminal identifier, where the first short-latency resource identifier is a short-latency resource identifier matching the first terminal. The processing module 12 connects to the sending and receiving module 10 and the acquiring module 11 separately. The processing module 12 is configured to assign the terminal identifier of the first terminal received by the sending and receiving module 10 to a first short-latency resource group to which the first short-latency resource identifier acquired by the acquiring module 11 belongs and update the terminal identifier of the first terminal received by the sending and receiving module 10 into a correspondence relationship between parameter information, a short-latency resource identifier, and a terminal identifier that are corresponding to the first short-latency resource group, so that the first terminal is managed to use a first short-latency resource corresponding to the first short-latency resource identifier to send data.

An implementation mechanism in which the short-latency resource management device in this embodiment implements a short-latency resource management method by using the foregoing modules is the same as an implementation mechanism of the foregoing related method embodiments. For details, reference may be made to the records of the foregoing related method embodiments, and therefore no further details are provided herein.

The short-latency resource management device in this embodiment implements the following by using the foregoing modules: receiving a terminal identifier and parameter information of a first terminal that has a short-latency requirement, where the terminal identifier and the parameter information of the first terminal are sent by a radio access network device; acquiring a first short-latency resource identifier according to the parameter information of the first terminal and a pre-established correspondence relationship between parameter information and a short-latency resource identifier; assigning the terminal identifier of the first terminal to a first short-latency resource group to which the first short-latency resource identifier belongs; and updating the terminal identifier of the first terminal into a correspondence relationship between parameter information, a short-latency resource identifier, and a terminal identifier that are corresponding to the first short-latency resource group, so that the first terminal is managed to use a short-latency resource corresponding to the first short-latency resource identifier to send data. The short-latency resource can be managed by using the technical solution in this embodiment, so that subsequent maintenance of the short-latency resource is facilitated and usage efficiency of the short-latency resource can be effectively improved.

Optionally, as shown in FIG. 5, in the short-latency resource management device in the foregoing embodiment, the sending and receiving module 10 is configured to send the first short-latency resource identifier acquired by the acquiring module 11 to the first terminal by using the radio access network device, so as to allow the first terminal to send data over the first short-latency resource corresponding to the first short-latency resource identifier.

Optionally, in the short-latency resource management device according to the foregoing embodiment, the parameter information of the first terminal includes any one or more of the following: a destination node address, a latency parameter, the maximum number of retransmission times, quality of service, and a service type that are corresponding to short-latency communication performed by the first terminal.

FIG. 6 is a schematic structural diagram of a short-latency resource management device according to another embodiment of the present invention. As shown in FIG. 6, based on the embodiment illustrated in FIG. 5, the short-latency resource management device in this embodiment may further include a grouping module 13 and an establishing module 14.

The sending and receiving module 10 is further configured to receive a terminal identifier and parameter information of at least one terminal and at least one short-latency resource identifier that are sent by a radio access network device, where the at least one short-latency resource identifier is a short-latency resource identifier that is corresponding to at least one short-latency resource allocated to the at least one terminal by the radio access network device, and the at least one terminal has a short-latency requirement. The grouping module 13 connects to the sending and receiving module 10. The grouping module 13 is configured to group, according to the parameter information of the at least one terminal, the at least one short-latency resource identifier received by the sending and receiving module 10, so as to obtain at least one short-latency resource group, where the at least one short-latency resource group includes the first short-latency resource group. The grouping module 13 is further configured to assign a terminal identifier of each terminal in the terminal identifier of the at least one terminal received by the sending and receiving module 10 to a short-latency resource group that is in the at least one short-latency resource group and to which the short-latency resource identifier corresponding to the terminal identifier of the terminal belongs, and update the at least one short-latency resource group. The establishing module 14 connects to the grouping module 13. The establishing module 14 is configured to establish, according to the at least one short-latency resource group updated by the grouping module 13, at least one correspondence relationship between parameter information, a short-latency resource identifier, and a terminal identifier, where the at least one correspondence relationship between the parameter information, the short-latency resource identifier, and the terminal identifier is corresponding to the at least one short-latency resource group in a one-to-one manner.

The parameter information in this embodiment is any one or more of the following: the destination node address, the latency parameter, the maximum number of retransmission times, the quality of service, and the service type.

Optionally, as shown in FIG. 6, in the short-latency resource management device in this embodiment, the acquiring module 11 may further include a judging unit 111, a first processing unit 112, and a second processing unit 113. The first processing unit 112 may further include a judging subunit 1121, a first processing subunit 1122, and a second processing subunit 1123.

The judging unit 111 connects to the sending and receiving module 10. The judging unit 111 is configured to determine, according to the parameter information of the first terminal received by the sending and receiving module 10, whether a short-latency resource group matching the first terminal exists in the at least one short-latency resource group. The judging subunit 1121 in the first processing unit 112 connects to the judging unit 111. The judging subunit 1121 is configured to: when the judging unit 111 determines that the short-latency resource group matching the first terminal exists in the at least one short-latency resource group, further determine whether a short-latency resource that is corresponding to the short-latency resource group matching the first terminal is capable of meeting a requirement of quality of service of all corresponding terminals after the terminal identifier of the first terminal is assigned to the short-latency resource group matching the first terminal. The first processing subunit 1122 in the first processing unit 112 connects to the judging subunit 1121. The first processing subunit 1122 is configured to: when the judging subunit 1121 determines that the short-latency resource that is corresponding to the short-latency resource group matching the first terminal is capable of meeting the requirement of the quality of service of all corresponding terminals after the terminal identifier of the first terminal is assigned to the short-latency resource group matching the first terminal, use the short-latency resource identifier corresponding to the short-latency resource group as a first short-latency resource identifier matching the first terminal, so as to use a short-latency resource corresponding to the first short-latency resource identifier as the short-latency resource of the first terminal. The second processing subunit 1123 in the first processing unit 112 connects to the judging subunit 1121 and the sending and receiving module 10 separately. The second processing subunit 1123 is configured to: when the judging subunit 1121 determines that the short-latency resource that is corresponding to the short-latency resource group matching the first terminal is incapable of meeting the requirement of the quality of service of all corresponding terminals after the terminal identifier of the first terminal is assigned to the short-latency resource group matching the first terminal, trigger the sending and receiving module 10 to send the radio access network device a short-latency resource assignment request that carries the terminal identifier of the first terminal, so as to request the radio access network device to assign a short-latency resource for the first terminal; receive, by using the sending and receiving module 10, a second short-latency resource identifier sent by the radio access network device, where the second short-latency resource identifier is a short-latency resource identifier that is corresponding to the short-latency resource allocated to the first terminal by the radio access network device; add the second short-latency resource identifier to the short-latency resource group matching the first terminal; and use the short-latency resource identifier that is corresponding to the short-latency resource group matching the first terminal as the first short-latency resource identifier, so as to use the short-latency resource corresponding to the first short-latency resource identifier as the short-latency resource of the first terminal.

The second processing unit 113 connects to the judging unit 111 and the sending and receiving module 10 separately. The second processing unit 113 is configured to: when the judging unit 111 determines that no short-latency resource group matching the first terminal exists in the at least one short-latency resource group, trigger the sending and receiving module 10 to send the radio access network device the short-latency resource assignment request that carries the terminal identifier of the first terminal, so as to request the radio access network device to assign the short-latency resource for the first terminal; receive, by using the sending and receiving module 10, a third short-latency resource identifier sent by the radio access network device, where the third short-latency resource identifier is the short-latency resource identifier that is corresponding to the short-latency resource allocated to the first terminal by the radio access network device; and use the third short-latency resource identifier as the first short-latency resource identifier matching the first terminal.

In this embodiment, the processing module 12 may connect to the first processing subunit 1122, the second processing subunit 1123, or the second processing 113 in a one-chosen manner. The processing module 12 is configured to assign the terminal identifier of the first terminal received by the sending and receiving module 10 to the first short-latency resource group to which the first short-latency resource identifier acquired by the first processing subunit 1122, the second processing subunit 1123, or the second processing unit 113 belongs, and update the terminal identifier of the first terminal received by the sending and receiving module 10 into the correspondence relationship between the parameter information, the short-latency resource identifier, and the terminal identifier that are corresponding to the first short-latency resource group, so that the first terminal is managed to use the first short-latency resource corresponding to the first short-latency resource identifier to send data.

Optionally, in the short-latency resource management device in this embodiment, the judging unit 112 is further specifically configured to determine, according to the parameter information of the first terminal received by the sending and receiving module 10, whether a short-latency resource group grouped according to the parameter information of the first terminal exists in the at least one short-latency resource group; if exists, determine that the short-latency resource group matching the first terminal exists; otherwise, determine that no short-latency resource group matching the first terminal exists.

Optionally, in the short-latency resource management device in this embodiment, the judging subunit 1121 in the first processing unit 112 is further specifically configured to: when the judging unit 111 determines that the short-latency resource group matching the first terminal exists in the at least one short-latency resource group, determine, by using a function T = tN/n, whether the short-latency resource corresponding to the short-latency resource group matching the first terminal is capable of meeting the requirement of the quality of service of all corresponding terminals after the terminal identifier of the first terminal is assigned to the short-latency resource group matching the first terminal, where n indicates the number of users that have a short-latency communication requirement and are correspondingly supported by a resource group, N indicates the number of short-latency resources in the short-latency resource group matching the first terminal, and t indicates a latency parameter; when a ≤ T, determine that the short-latency resource corresponding to the short-latency resource group matching the first terminal is still capable of meeting the requirement of the quality of service of all terminals corresponding to the short-latency resource group after the terminal identifier of the first terminal is assigned to the short-latency resource group matching the first terminal; and when T < a, determine that the short-latency resource corresponding to the short-latency resource group matching the first terminal is incapable of meeting the requirement of the quality of service of all terminals corresponding to the short-latency resource group after the terminal identifier of the first terminal is assigned to the short-latency resource group matching the first terminal, where a is a threshold.

It should be noted that in the short-latency resource management device in this embodiment illustrated in FIG. 6, that the foregoing multiple optional technical solutions exist at the same time is used as an example to describe the technical solution of the present invention. In an actual application, the foregoing multiple optional technical solutions may form an embodiment independently in a one-chosen manner or may form an embodiment by using a manner of any combination.

An implementation mechanism in which the short-latency resource management device in this embodiment implements a short-latency resource management method by using the foregoing modules is the same as an implementation mechanism of the foregoing related method embodiments. For details, reference may be made to the records of the foregoing related method embodiments, and therefore no further details are provided herein.

The short-latency resource management device in this embodiment is capable of implementing short-latency resource management by using the foregoing modules, so that subsequent maintenance of a short-latency resource is facilitated and usage efficiency of a short-latency resource can be effectively improved.

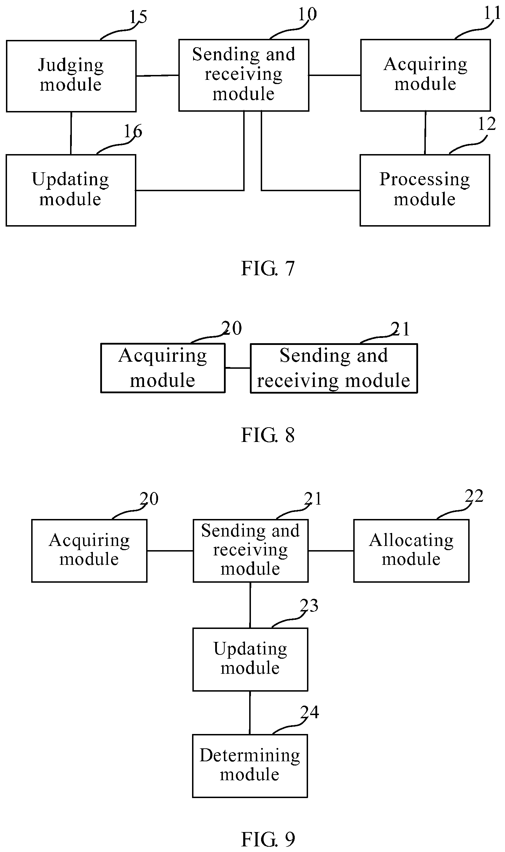

FIG. 7 is a schematic structural diagram of a short-latency resource management device according to still another embodiment of the present invention. As shown in FIG. 7, based on the embodiment illustrated in FIG. 5, the short-latency resource management device in this embodiment may further include a judging module 15.

The sending and receiving module 10 is configured to receive a validity authentication request that carries a terminal identifier of a second terminal and the first short-latency resource identifier and is sent by the radio access network device, where the validity authentication request is sent by the radio access network device according to data that carries the terminal identifier of the second terminal, is sent by the second terminal, and is received over the first short-latency resource. The judging module 15 connects to the sending and receiving module 10. The judging module 15 is configured to determine, according to the validity authentication request received by the sending and receiving module 10, whether it is valid for the second terminal to occupy the first short-latency resource. The sending and receiving module 10 is configured to: if the judging module 15 determines that it is valid for the second terminal to occupy the first short-latency resource, send validity information to the radio access network device, so as to allow the radio access network device to forward the data to a corresponding core network node or a service server according to the validity information. The sending and receiving module 10 is further configured to: if the judging module 15 determines that it is invalid for the second terminal to occupy the first short-latency resource, send invalidity information to the radio access network device, so as to allow the radio access network device to reject access of the first terminal according to the invalidity information and discard the data.

Optionally, in the short-latency resource management device in this embodiment, the judging module 15 may also connect to the establishing module 14 shown in FIG. 6, which is not shown in FIG. 7. The judging module 15 is specifically configured to determine, according to the correspondence relationship between the parameter information, the short-latency resource identifier, and the terminal identifier that are corresponding to the first short-latency resource group, whether the terminal identifier of the second terminal is corresponding to the first short-latency resource identifier, where the correspondence relationship is established by the establishing module 14; if corresponding, determine that it is valid for the second terminal to occupy the first short-latency resource; otherwise, determine that it is invalid for the second terminal to occupy the first short-latency resource.

Optionally, in the short-latency resource management device in this embodiment, an updating module 16 is further included. The updating module 16 connects to the judging module 15. The updating module 16 is configured to: when the judging module 15 determines that it is invalid for the second terminal to occupy the first short-latency resource, update the number of times that the first short-latency resource is invalidly occupied. The sending and receiving module 10 further connects to the updating module 16. The sending and receiving module 10 is further configured to: when the number of times that the first short-latency resource updated by the updating module 16 is invalidly occupied reaches a preset threshold, send the radio access network device an update request that carries the first short-latency resource identifier, so as to request the radio access network device to update the first short-latency resource.

Optionally, in the short-latency resource management device in this embodiment, the sending and receiving module 10 is further configured to receive a query request that carries the first short-latency resource identifier and is sent by the radio access network device. The acquiring module 11 is further configured to acquire, according to the correspondence relationship between the parameter information, the short-latency resource identifier, and the terminal identifier that are corresponding to the first short-latency resource group, at least one terminal identifier corresponding to the first short-latency resource identifier, where the at least one terminal identifier includes the terminal identifier of the first terminal. The sending and receiving module 10 is further configured to send the at least one terminal identifier to the radio access network device.

It should be noted that in the short-latency resource management device in this embodiment illustrated in FIG. 7, that the foregoing multiple optional technical solutions exist at the same time is used as an example to describe the technical solution of the present invention. In an actual application, the foregoing multiple optional technical solutions may form an embodiment independently in a one-chosen manner or may form an embodiment by using a manner of any combination. In addition, optionally, the embodiment illustrated in FIG. 7 may also form a new embodiment in combination with the embodiment illustrated in FIG. 6. For details, reference may be made to the record of the foregoing related embodiment, and therefore no further details are provided herein.

An implementation mechanism in which the short-latency resource management device in this embodiment implements a short-latency resource management method by using the foregoing modules is the same as an implementation mechanism of the foregoing related method embodiments. For details, reference may be made to the records of the foregoing related method embodiments, and therefore no further details are provided herein.

The short-latency resource management device in this embodiment is capable of detecting validity of occupancy of a short-latency resource by a terminal, thereby ensuring security and effectiveness of usage of the short-latency resource in M2M communication. In addition, by using the technical solution in this embodiment, the short-latency resource for which the number of times that the short-latency resource is invalidly occupied exceeds the threshold can be updated and the short-latency resource can be effectively maintained. M2M communication efficiency is effectively improved by using the technical solution in this embodiment.

FIG. 8 is structural diagram of a radio access network device according to an embodiment of the present invention. As shown in FIG. 8, the radio access network device in this embodiment may specifically include an acquiring module 20 and a sending and receiving module 21.

The acquiring module 20 is configured to acquire a terminal identifier and parameter information of a first terminal that has a short-latency requirement. The sending and receiving module 21 connects to the acquiring module 20. The sending and receiving module 21 is configured to send the terminal identifier and the parameter information of the first terminal that are acquired by the acquiring module 20 to a short-latency resource management device, so as to allow the short-latency resource management device to acquire a first short-latency resource identifier according to the parameter information of the first terminal and at least one pre-established correspondence relationship between parameter information, a short-latency resource identifier, and a terminal identifier, where the first short-latency resource identifier is a short-latency resource identifier matching the first terminal; assign the terminal identifier of the first terminal to a first short-latency resource group to which the first short-latency resource identifier belongs; and update the terminal identifier of the first terminal into a correspondence relationship between parameter information, a short-latency resource identifier, and a terminal identifier that are corresponding to the first short-latency resource group, so that the first terminal is managed to use a first short-latency resource corresponding to the first short-latency resource identifier to send data.

An implementation mechanism in which the short-latency resource management device in this embodiment implements a short-latency resource management method by using the foregoing modules is the same as an implementation mechanism of the foregoing related method embodiments. For details, reference may be made to the records of the foregoing related method embodiments, and therefore no further details are provided herein.

The short-latency resource management device in this embodiment is capable of managing a short-latency resource by using the foregoing modules. This facilitates subsequent maintenance of the short-latency resource and can effectively improve usage efficiency of the short-latency resource.

FIG. 9 is structural diagram of a radio access network device according to another embodiment of the present invention. As shown in FIG. 9, the radio access network device in this embodiment is on the basis of the radio access network device shown in FIG. 8, and the acquiring module 20 is specifically configured to acquire the terminal identifier and the parameter information of the first terminal from the first terminal, a core network device, or a service server, where the service server is a server which performs short-latency communication with the first terminal.

Optionally, in the radio access network device in this embodiment, the sending and receiving module 21 is configured to receive the first short-latency resource identifier that matches the first terminal and is sent by the short-latency resource management device. The sending and receiving module 21 is configured to send the received first short-latency resource identifier to the first terminal, so as to allow the first terminal to send data over the short-latency resource corresponding to the first short-latency resource identifier.

Optionally, the radio access network device in this embodiment may further include an allocating module 22. In the radio access network device in this embodiment, the sending and receiving module 21 is further configured to receive a resource assignment request that carries the terminal identifier of the first terminal and is sent by the short-latency resource management device. The allocating module 22 connects to the sending and receiving module 21. The allocating module 22 is configured to allocate a second short-latency resource to the first terminal according to the resource assignment request received by the sending and receiving module 21. The sending and receiving module 21 is configured to send the short-latency resource management device a second short-latency resource identifier corresponding to the second short-latency resource allocated by the allocating module 22.

Optionally, in the radio access network device in this embodiment, further, the sending and receiving module 21 is further configured to receive, over the first short-latency resource, data that carries a terminal identifier of a second terminal and is sent by the second terminal, and send the short-latency resource management device a validity authentication request that carries the terminal identifier of the second terminal and the first short-latency resource identifier, so as to allow the short-latency resource management device to determine whether it is valid for the second terminal to occupy the first short-latency resource when the second terminal sends the data.

Optionally, in the radio access network device in this embodiment, further, the sending and receiving module 21 is further configured to: when the short-latency resource management device determines that it is valid for the second terminal to occupy the first short-latency resource when the second terminal sends the data, receive validity information sent by the short-latency resource management device and forward, to a corresponding core network node or service server according to the validity information, the received data sent by the second terminal.

Optionally, in the radio access network device in this embodiment, further, the sending and receiving module 21 is further configured to: when the short-latency resource management device determines that it is invalid for the second terminal to occupy the first short-latency resource when the second terminal sends the data, receive invalidity information sent by the short-latency resource management device, reject, according to the invalidity information sent by the sending and receiving module 21, access of the second terminal, and discard the data.

Optionally, in the radio access network device in this embodiment, further, an updating module 23 may further be included. In this embodiment, the sending and receiving module 21 is further configured to: when the short-latency resource management device determines that the number of times that the first short-latency resource is invalidly occupied reaches a preset threshold, receive an update request sent by the short-latency resource management device, where the update request carries the first short-latency resource identifier. The updating module 23 connects to the sending and receiving module 21. The updating module 23 is configured to update the first short-latency resource according to the update request received by the sending and receiving module 21.

Optionally, in the radio access network device in this embodiment, further, the sending and receiving module 21 is further configured to send a query request to the short-latency resource management device and receive a terminal identifier of at least one terminal corresponding to the first short-latency resource identifier, where the query request carries the first short-latency resource identifier and the query request is used for the short-latency resource management device to query the terminal identifier of the at least one terminal corresponding to the first short-latency resource identifier, and the terminal identifier of the at least one terminal is sent by the short-latency resource management device.

Optionally, in the radio access network device in this embodiment, further, the sending and receiving module 21 is further configured to send an update parameter to the at least one terminal according to the terminal identifier of the at least one terminal, where the update parameter is an update parameter for updating the first short-latency resource corresponding to the first short-latency resource identifier and the update parameter is used for the at least one terminal to update stored resource parameter information of the first short-latency resource according to the update parameter.

Optionally, in the radio access network device in this embodiment, further, the sending and receiving module 21 is further configured to broadcast the first short-latency resource identifier and the update parameter for updating the first short-latency resource, so as to allow the at least one terminal using the first short-latency resource to update the stored resource parameter information of the first short-latency resource according to the update parameter.

Optionally, in the radio access network device in this embodiment, further, the sending and receiving module 21 is further configured to broadcast the first short-latency resource identifier, so as to allow the at least one terminal using the first short-latency resource to determine, according to the received first short-latency resource identifier, that the stored resource parameter information of the first short-latency resource needs to be updated; receive an update request sent by the at least one terminal using the first short-latency resource, where the update request carries the first short-latency resource identifier; and send, according to the received update request, the at least one terminal using the first short-latency resource the update parameter for updating the first short-latency resource, so as to allow the at least one terminal using the first short-latency resource to update the stored resource parameter information of the first short-latency resource according to the update parameter

Optionally, in the radio access network device in this embodiment, further, a determining module 24 may further be included. The determining module 24 is configured to determine that a current resource update period starts or ends. For example, the updating module 23 may connect to the determining module 24. The updating module 23 is configured to start to update the first short-latency resource according to the starting or ending of the current resource update period determined by the determining module 24. Here, according to a system setting, specifically the first short-latency resource is updated when the current resource update period starts or ends.

It should be noted that in the radio access network device in this embodiment illustrated in FIG. 9, that the foregoing multiple optional technical solutions exist at the same time is used as an example to describe the technical solution of the present invention. In an actual application, the foregoing multiple optional technical solutions may form an embodiment independently in a one-chosen manner or may form an embodiment by using a manner of any combination.

An implementation mechanism in which the radio access network device in this embodiment implements a short-latency resource management method by using the foregoing modules is the same as an implementation mechanism of the foregoing related method embodiments. For details, reference may be made to the records of the foregoing related method embodiments, and therefore no further details are provided herein.

The radio access network device in this embodiment is capable of implementing short-latency resource management by using the foregoing modules, so that subsequent maintenance of a short-latency resource is facilitated and usage efficiency of a short-latency resource can be effectively improved.

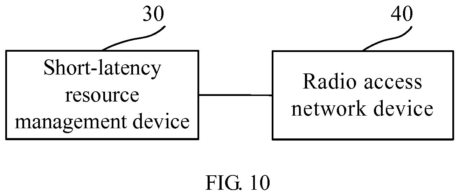

FIG. 10 is a schematic structural diagram of a short-latency resource management system according to an embodiment of the present invention. As shown in FIG. 10, the short-latency resource management system in this embodiment includes a short-latency resource management device 30 and a radio access network device 40.

The radio access network device 40 is configured to acquire a terminal identifier and parameter information of a first terminal that has a short-latency requirement; and send the terminal identifier and the parameter information of the first terminal to the short-latency resource management device 30.

The short-latency resource management device 30 is configured to receive the terminal identifier and the parameter information of the first terminal that has a short-latency requirement, where the terminal identifier and the parameter information of the first terminal are sent by the radio access network device 40; acquire a first short-latency resource identifier according to the parameter information of the first terminal and at least one pre-established correspondence relationship between parameter information, a short-latency resource identifier, and a terminal identifier, where the first short-latency resource identifier is a short-latency resource identifier matching the first terminal; assign the terminal identifier of the first terminal to a first short-latency resource group to which the first short-latency resource identifier belongs; and update the terminal identifier of the first terminal into a correspondence relationship between parameter information, a short-latency resource identifier, and a terminal identifier that are corresponding to the first short-latency resource group, so that the first terminal is managed to use a short-latency resource corresponding to the first short-latency resource identifier to send data.

The short-latency resource management device 30 in the short-latency resource management system in this embodiment may use the short-latency resource management device in the embodiment illustrated in FIG. 5. The radio access network device 40 may use the radio access network device in the embodiment illustrated in FIG. 8 and may use an implementation mechanism in the foregoing related method embodiments to implement short-latency resource management. For details, reference may be made to the records of the foregoing related embodiments, and therefore no further details are provided herein.

Further, optionally, the short-latency resource management device 30 in the short-latency resource management system in this embodiment may use the short-latency resource management device in the embodiment illustrated in FIG. 6 or FIG. 7. The radio access network device 40 may use the radio access network device in the embodiment illustrated in FIG. 9 and may use an implementation mechanism in the foregoing related method embodiments to implement short-latency resource management. For details, reference may be made to the records of the foregoing related embodiments and therefore no further details are provided herein.

The short-latency resource management system in this embodiment is capable of implementing short-latency resource management by using the foregoing modules, so that subsequent maintenance of a short-latency resource is facilitated and usage efficiency of a short-latency resource can be effectively improved.

The apparatus embodiment described above is merely exemplary. The units described as separate parts may or may not be physically separated; and the parts displayed as units may or may not be physical units, may be located in one position, or may be distributed on at least two network elements. A part or all of the modules may be selected according to actual needs to achieve the objectives of the solutions of the embodiments. Persons of ordinary skill in the art may understand and implement the embodiments without creative efforts.

Finally, it should be noted that the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, as long as such modifications or replacements do not cause the essence of corresponding technical solutions to depart from the scope of the technical solutions of the embodiments of the present invention.

## Claims

1. A short-latency resource management method performed by a short-latency resource management device (30), the method comprising:
**a.)** receiving (100) a terminal identifier and parameter information of a first terminal that has a short-latency requirement, wherein the parameter information is corresponding to short-latency communication performed by the first terminal, and wherein the terminal identifier and the parameter information of the first terminal are sent by a radio access network device (40):
**b.)** acquiring (101) a first short-latency resource identifier corresponding to a first short-latency resource according to the parameter information of the first terminal and at least one pre-established correspondence relationship between parameter information, a short-latency resource identifier, and a terminal identifier, wherein the first short-latency resource identifier is a short-latency resource identifier matching the first terminal
**c.)** assigning the terminal identifier of the first terminal to a first short-latency resource group to which the first short-latency resource identifier belongs according to the parameter information of the first terminal;
**d.)** updating (102) the at least one correspondence relationship by establishing a further correspondence relationship being a correspondence relationship between the terminal identifier of the first terminal, the first short-latency resource identifier and the parameter information of the first terminal that are corresponding to the first short latency resource group and
**e.)** sending, the first short-latency resource identifier to the radio access network device (40).

2. The method according to claim 1, wherein the parameter information of the first terminal comprises any one or more of the following: a destination node address, a latency parameter, a maximum number of retransmission times, quality of service, and a service type that are corresponding to the short-latency communication performed by the first terminal.

3. The method according to any one of claims 1-2, wherein before step a.) the method further comprises:
receiving a terminal identifier and parameter information of at least one terminal and at least one short-latency resource identifier that are sent by the radio access network device, wherein the at least one short-latency resource identifier comprises a short-latency resource identifier that is corresponding to at least one short-latency resource allocated to the at least one terminal by the radio access network device, and the at least one terminal also has a short-latency requirement;
grouping the at least one short-latency resource identifier according to the parameter information of the at least one terminal, so as to obtain at least one short-latency resource group, wherein the at least one short-latency resource group comprises the first short-latency resource group;
assigning a terminal identifier of the each terminal in the terminal identifier of the at least one terminal to a short-latency resource group to which the short-latency resource identifier corresponding to the terminal identifier of the terminal belongs, and updating the at least one short-latency resource group; and
establishing the at least one correspondence relationship between parameter information, the short-latency resource identifier, and the terminal identifier according to the at least one short-latency resource group that is updated, wherein the at least one correspondence relationship between the parameter information, the short-latency resource identifier, and the terminal identifier is corresponding to the at least one short-latency resource group in a one-to-one manner.

4. The method according to claim 3, wherein the acquiring the first short-latency resource identifier according to the parameter information of the first terminal and at least one pre-established correspondence relationship between parameter information, the short-latency resource identifier, and the terminal identifier comprises:
determining, according to the parameter information of the first terminal, whether a short-latency resource group matching the first terminal exists in the at least one short-latency resource group;
when the short-latency resource group matching the first terminal exists in the at least one short-latency resource group, further determining whether a short-latency resource that is corresponding to the short-latency resource group matching the first terminal is capable of meeting a requirement of quality of service of all corresponding terminals after the terminal identifier of the first terminal is assigned to the short-latency resource group matching the first terminal, wherein all the corresponding terminals are terminals corresponding to all terminal identifiers comprised in the short-latency resource group matching the first terminal;
when the short-latency resource that is corresponding to the short-latency resource group matching the first terminal is capable of meeting the requirement of the quality of service of the terminals corresponding to all the terminal identifiers after the terminal identifier of the first terminal is assigned to the short-latency resource group matching the first terminal, using a short-latency resource identifier that is corresponding to the short-latency resource group matching the first terminal as the first short-latency resource identifier matching the first terminal, so as to use a short-latency resource corresponding to the first short-latency resource identifier as a short-latency resource of the first terminal;
otherwise, when the short-latency resource that is corresponding to the short-latency resource group matching the first terminal is incapable of meeting the requirement of the quality of service of the terminals corresponding to all the terminal identifiers after the terminal identifier of the first terminal is assigned to the short-latency resource group matching the first terminal, sending the radio access network device a short-latency resource assignment request that carries the terminal identifier of the first terminal, so as to request the radio access network device to assign a short-latency resource for the first terminal;
receiving a second short-latency resource identifier sent by the radio access network device, wherein the second short-latency resource identifier is a short-latency resource identifier that is corresponding to the short-latency resource allocated to the first terminal by the radio access network device; adding the second short-latency resource identifier to the short-latency resource group matching the first terminal; and using the short-latency resource identifier that is corresponding to the short-latency resource group matching the first terminal as the first short-latency resource identifier, so as to use the short-latency resource corresponding to the first short-latency resource identifier as the short-latency resource of the first terminal; and
when no short-latency resource group matching the first terminal exists in the at least one short-latency resource group, sending the radio access network device the short-latency resource assignment request that carries the terminal identifier of the first terminal, so as to request the radio access network device to assign a short-latency resource for the first terminal; receiving a third short-latency resource identifier sent by the radio access network device, wherein the third short-latency resource identifier is a short-latency resource identifier that is corresponding to the short-latency resource allocated to the first terminal by the radio access network device; and using the third short-latency resource identifier as the first short-latency resource identifier matching the first terminal.

5. The method according to claim 1, further comprising:
receiving a validity authentication request that carries a terminal identifier of a second terminal and the first short-latency resource identifier and is sent by the radio access network device, wherein the validity authentication request is sent by the radio access network device according to data that carries the terminal identifier of the second terminal, is sent by the second terminal, and is received over the first short-latency resource (200); and
determining whether it is valid for the second terminal to occupy the first short-latency resource (201); if it is valid, sending validity information to the radio access network device, so as to allow the radio access network device to forward the data to a corresponding core network node or a service server according to the validity information (202); otherwise, if it is invalid,
sending invalidity information to the radio access network device, so as to allow the radio access network device to reject access of the second terminal according to the invalidity information and discard the data (203).

6. The method according to claim 5, wherein the determining whether it is valid for the second terminal to occupy the first short-latency resource comprises:
determining, according to the correspondence relationship between the parameter information, the short-latency resource identifier, and the terminal identifier that are corresponding to the first short-latency resource group, whether the terminal identifier of the second terminal is corresponding to the first short-latency resource identifier; if corresponding, determining that it is valid for the second terminal to occupy the first short-latency resource;
otherwise, determining that it is invalid for the second terminal to occupy the first short-latency resource.

7. The method according to claim 1, further comprising:
receiving a query request that carries the first short-latency resource identifier and is sent by the radio access network device;
acquiring at least one terminal identifier corresponding to the first short-latency resource identifier according to the correspondence relationship between the parameter information, the short-latency resource identifier, and the terminal identifier that are corresponding to the first short-latency resource group, wherein the at least one terminal identifier comprises the terminal identifier of the first terminal; and
sending the at least one terminal identifier to the radio access network device.

8. A short-latency resource management device (30) configured to perform any of the methods according to claims 1 - 7.

## Patentansprüche

1. Verfahren zur Verwaltung einer Ressource mit kurzer Latenz, das durch eine Vorrichtung zur Verwaltung einer Ressource mit kurzer Latenz (30) durchgeführt wird, wobei das Verfahren Folgendes umfasst:
**a.)** Empfangen (100) einer Endgerätekennung und von Parameterinformationen eines ersten Endgerätes, das eine Anforderung für kurze Latenz aufweist, wobei die Parameterinformationen einer Kommunikation mit kurzer Latenz, die durch das erste Endgerät durchgeführt wird, entsprechen, und wobei die Endgerätekennung und die Parameterinformationen des ersten Endgerätes durch eine Netzwerkvorrichtung mit Funkzugang (40) gesendet werden;
**b.)** Erfassen (101) einer ersten Kennung einer Ressource mit kurzer Latenz, die einer ersten Ressource mit kurzer Latenz entspricht, gemäß den Parameterinformationen des ersten Endgerätes und mindestens einer vorab festgelegten Übereinstimmungsbeziehung zwischen den Parameterinformationen, einer Kennung einer Ressource mit kurzer Latenz und einer Endgerätekennung, wobei die erste Kennung einer Ressource mit kurzer Latenz eine Kennung einer Ressource mit kurzer Latenz ist, die mit dem ersten Endgerät übereinstimmt;
**c.)** Zuweisen der Endgerätekennung des ersten Endgerätes zu einer ersten Gruppe von Ressourcen mit kurzer Latenz, zu welcher die erste Kennung einer Ressource mit kurzer Latenz gehört, gemäß den Parameterinformationen des ersten Endgerätes;
**d.)** Aktualisieren (102) der mindestens einen Übereinstimmungsbeziehung durch das Festlegen einer weiteren Übereinstimmungsbeziehung, bei welcher es sich um eine Übereinstimmungsbeziehung zwischen der Endgerätekennung des ersten Endgerätes, der ersten Kennung einer Ressource mit kurzer Latenz und den Parameterinformationen des ersten Endgerätes, die der ersten Gruppe von Ressourcen mit kurzer Latenz entsprechen, handelt; und
**e.)** Senden der ersten Kennung einer Ressource mit kurzer Latenz an die Netzwerkvorrichtung mit Funkzugang (40).

2. Verfahren nach Anspruch 1, wobei die Parameterinformationen des ersten Endgerätes eines oder mehrere der Folgenden umfassen: eine Zielknotenadresse, einen Latenzparameter, eine maximale Zahl von Neuübertragungen, eine Dienstqualität und eine Dienstart, die der Kommunikation mit kurzer Latenz, die durch das erste Endgerät durchgeführt wird, entsprechen.

3. Verfahren nach einem der Ansprüche 1-2, wobei das Verfahren vor Schritt a.) Folgendes umfasst:
Empfangen einer Endgerätekennung und von Parameterinformationen von mindestens einem Endgerät und mindestens einer Kennung einer Ressource mit kurzer Latenz, die durch die Netzwerkvorrichtung mit Funkzugang gesendet werden, wobei die mindestens eine Kennung einer Ressource mit kurzer Latenz eine Kennung einer Ressource mit kurzer Latenz umfasst, die mindestens einer Ressource mit kurzer Latenz entspricht, die dem mindestens einen Endgerät durch die Netzwerkvorrichtung mit Funkzugang zugewiesen wird, und das mindestens eine Endgerät auch eine Anforderung für kurze Latenz aufweist;
Gruppieren der mindestens einen Kennung einer Ressource mit kurzer Latenz gemäß den Parameterinformationen des mindestens einen Endgerätes, um mindestens eine Gruppe von Ressourcen mit kurzer Latenz zu erhalten, wobei die mindestens eine Gruppe von Ressourcen mit kurzer Latenz die erste Gruppe von Ressourcen mit kurzer Latenz umfasst;
Zuweisen einer Endgerätekennung jedes Endgerätes mit der Endgerätekennung des mindestens einen Endgerätes zu einer Gruppe von Ressourcen mit kurzer Latenz, zu welcher die Kennung einer Ressource mit kurzer Latenz, die der Endgerätekennung des Endgerätes entspricht, gehört, und Aktualisieren der mindestens einen Gruppe von Ressourcen mit kurzer Latenz; und
Festlegen der mindestens einen Übereinstimmungsbeziehung zwischen den Parameterinformationen, der Kennung einer Ressource mit kurzer Latenz und der Endgerätekennung gemäß der mindestens einen Gruppe von Ressourcen mit kurzer Latenz, die aktualisiert wird, wobei die mindestens eine Übereinstimmungsbeziehung zwischen den Parameterinformationen, der Kennung einer Ressource mit kurzer Latenz und der Endgerätekennung mindestens einer Gruppe von Ressourcen mit kurzer Latenz in einer Eins-zu-Eins-Entsprechung entspricht.

4. Verfahren nach Anspruch 3, wobei das Erfassen der ersten Kennung einer Ressource mit kurzer Latenz gemäß den Parameterinformationen des ersten Endgerätes und mindestens einer vorab festgelegten Übereinstimmungsbeziehung zwischen den Parameterinformationen, der Kennung einer Ressource mit kurzer Latenz und der Endgerätekennung Folgendes umfasst:
Bestimmen, gemäß den Parameterinformationen des ersten Endgerätes, ob eine Gruppe von Ressourcen mit kurzer Latenz, die mit dem ersten Endgerät übereinstimmt, in der mindestens einen Gruppe von Ressourcen mit kurzer Latenz vorliegt;
wenn die Gruppe von Ressourcen mit kurzer Latenz, die mit dem ersten Endgerät übereinstimmt, in der mindestens einen Gruppe von Ressourcen mit kurzer Latenz vorliegt, ferner Bestimmen, ob eine Ressource mit kurzer Latenz, die der Gruppe von Ressourcen mit kurzer Latenz, die mit dem ersten Endgerät übereinstimmt, entspricht, in der Lage ist, eine Dienstqualitätsanforderung aller entsprechender Endgeräte zu erfüllen, nachdem die Endgerätekennung des ersten Endgerätes zu der Gruppe von Ressourcen mit kurzer Latenz, die mit dem ersten Endgerät übereinstimmt, zugewiesen wird, wobei sämtliche entsprechenden Endgeräte Endgeräte sind, die allen Endgerätekennungen entsprechen, die in der Gruppe von Ressourcen mit kurzer Latenz, die mit dem ersten Endgerät übereinstimmt, enthalten sind;
wenn die Ressource mit kurzer Latenz, die der Gruppe von Ressourcen mit kurzer Latenz, die mit dem ersten Endgerät übereinstimmt, entspricht, in der Lage ist, die Dienstqualitätsanforderung der Endgeräte, die sämtlichen Endgerätekennungen entsprechen, zu erfüllen, nachdem die Endgerätekennung des ersten Endgerätes zu der Gruppe von Ressourcen mit kurzer Latenz, die mit dem ersten Endgerät übereinstimmt, zugewiesen wird, Verwenden einer Kennung einer Ressource mit kurzer Latenz, die der Gruppe von Ressourcen mit kurzer Latenz, die mit dem ersten Endgerät übereinstimmt, entspricht, als die erste Kennung einer Ressource mit kurzer Latenz, die mit dem ersten Endgerät übereinstimmt, um eine Ressource mit kurzer Latenz, die der ersten Kennung einer Ressource mit kurzer Latenz entspricht, als eine Ressource mit kurzer Latenz des ersten Endgerätes zu verwenden;
ansonsten, wenn die Ressource mit kurzer Latenz, die der Gruppe von Ressourcen mit kurzer Latenz, die mit dem ersten Endgerät übereinstimmt, entspricht, nicht in der Lage ist, die Dienstqualitätsanforderung der Endgeräte, die sämtlichen Endgerätekennungen entsprechen, zu erfüllen, nachdem die Endgerätekennung des ersten Endgerätes zu der Gruppe von Ressourcen mit kurzer Latenz, die mit dem ersten Endgerät übereinstimmt, zugewiesen wird, Senden, an die Netzwerkvorrichtung mit Funkzugang, einer Anfrage zur Zuweisung einer Ressource mit kurzer Latenz, welche die Endgerätekennung des ersten Endgerätes enthält, um die Netzwerkvorrichtung mit Funkzugang aufzufordern, eine Ressource mit kurzer Latenz für das erste Endgerät zuzuweisen; Empfangen einer zweiten Kennung einer Ressource mit kurzer Latenz, die durch die Netzwerkvorrichtung mit Funkzugang gesendet wird, wobei die zweite Kennung einer Ressource mit kurzer Latenz eine Kennung einer Ressource mit kurzer Latenz ist, die der Ressource mit kurzer Latenz entspricht, die dem ersten Endgerät durch die Netzwerkvorrichtung mit Funkzugang zugewiesen wird; Hinzufügen der zweiten Kennung einer Ressource mit kurzer Latenz zu der Gruppe von Ressourcen mit kurzer Latenz, die mit dem ersten Endgerät übereinstimmt; und Verwenden der Kennung einer Ressource mit kurzer Latenz, die der Gruppe von Ressourcen mit kurzer Latenz, die mit dem ersten Endgerät übereinstimmt, entspricht, als die erste Kennung einer Ressource mit kurzer Latenz, um die Ressource mit kurzer Latenz, die der ersten Kennung einer Ressource mit kurzer Latenz entspricht, als die Ressource mit kurzer Latenz des ersten Endgerätes zu verwenden; und
wenn keine Gruppe von Ressourcen mit kurzer Latenz, die mit dem ersten Endgerät übereinstimmt, in der mindestens einen Gruppe von Ressourcen mit kurzer Latenz vorliegt, Senden, an die Netzwerkvorrichtung mit Funkzugang, der Anfrage zum Zuweisen einer Ressource mit kurzer Latenz, welche die Endgerätekennung des ersten Endgerätes enthält, um die Netzwerkvorrichtung mit Funkzugang aufzufordern, eine Ressource mit kurzer Latenz für das erste Endgerät zuzuweisen; Empfangen einer dritten Kennung einer Ressource mit kurzer Latenz, die durch die Netzwerkvorrichtung mit Funkzugang gesendet wird, wobei die dritte Kennung einer Ressource mit kurzer Latenz eine Kennung einer Ressource mit kurzer Latenz ist, die der Ressource mit kurzer Latenz entspricht, die dem ersten Endgerät durch die Netzwerkvorrichtung mit Funkzugang zugewiesen wird; und Verwenden der dritten Kennung einer Ressource mit kurzer Latenz als die erste Kennung einer Ressource mit kurzer Latenz, die mit dem ersten Endgerät übereinstimmt.

5. Verfahren nach Anspruch 1, welches ferner Folgendes umfasst:
Empfangen einer Gültigkeitsauthentifizierungsanfrage, die eine Endgerätekennung eines zweiten Endgerätes und die erste Kennung einer Ressource mit kurzer Latenz enthält und durch die Netzwerkvorrichtung mit Funkzugang gesendet wird, wobei die Gültigkeitsauthentifizierungsanfrage durch die Netzwerkvorrichtung mit Funkzugang gemäß Daten, welche die Endgerätekennung des zweiten Endgerätes enthalten, die durch das zweite Endgerät gesendet werden, gesendet wird und über die erste Ressource mit kurzer Latenz empfangen wird (200); und
Bestimmen, ob es für das zweite Endgerät gestattet ist, die erste Ressource mit kurzer Latenz zu belegen (201); wenn dies gestattet ist, Senden von Gültigkeitsinformationen an die Netzwerkvorrichtung mit Funkzugang, um es der Netzwerkvorrichtung mit Funkzugang zu gestatten, die Daten gemäß den Gültigkeitsinformationen an einen entsprechenden Kernnetzwerkknoten oder einen Dienstserver weiterzuleiten (202); ansonsten, wenn dies nicht gestattet ist, Senden von Ungültigkeitsinformationen an die Netzwerkvorrichtung mit Funkzugang, um es der Netzwerkvorrichtung mit Funkzugang zu gestatten, einen Zugriff des zweiten Endgerätes gemäß den Ungültigkeitsinformationen zu verweigern und die Daten zu verwerfen (203).

6. Verfahren nach Anspruch 5, wobei das Bestimmen, ob es gestattet ist, dass das zweite Endgerät die erste Ressource mit kurzer Latenz belegt, Folgendes umfasst:
Bestimmen, gemäß der Übereinstimmungsbeziehung zwischen den Parameterinformationen, der Kennung einer Ressource mit kurzer Latenz und der Endgerätekennung, die der ersten Gruppe von Ressourcen mit kurzer Latenz entsprechen, ob die Endgerätekennung des zweiten Endgerätes der ersten Kennung einer Ressource mit kurzer Latenz entspricht; wenn sie dieser entspricht, Bestimmen, dass es gestattet ist, dass das zweite Endgerät die erste Ressource mit kurzer Latenz belegt;
ansonsten Bestimmen, dass es nicht gestattet ist, dass das zweite Endgerät die erste Ressource mit kurzer Latenz belegt.

7. Verfahren nach Anspruch 1, welches ferner Folgendes umfasst:
Empfangen einer Abfrageanfrage, welche die erste Kennung einer Ressource mit kurzer Latenz enthält und durch die Netzwerkvorrichtung mit Funkzugang gesendet wird;
Erfassen mindestens einer Endgerätekennung, die der ersten Kennung einer Ressource mit kurzer Latenz entspricht, gemäß der Übereinstimmungsbeziehung zwischen den Parameterinformationen, der Kennung einer Ressource mit kurzer Latenz und der Endgerätekennung, die der ersten Gruppe von Ressourcen mit kurzer Latenz entsprechen, wobei die mindestens eine Endgerätekennung die Endgerätekennung des ersten Endgerätes umfasst; und
Senden der mindestens einen Endgerätekennung an die Netzwerkvorrichtung mit Funkzugang.

8. Vorrichtung zur Verwaltung einer Ressource mit kurzer Latenz (30), die zum Durchführen eines der Verfahren nach Anspruch 1-7 konfiguriert ist.

## Revendications

1. Procédé de gestion de ressources à faible latence réalisé par un dispositif (30) de gestion de ressources à faible latence, le procédé comportant les étapes consistant à :
a.) recevoir (100) un identifiant de terminal et des informations de paramètres d'un premier terminal qui présente une exigence de faible latence, les informations de paramètres correspondant à une communication à faible latence réalisée par le premier terminal, et l'identifiant de terminal et les informations de paramètres du premier terminal étant émis par un dispositif (40) de réseau d'accès radio ;
b.) acquérir (101) un premier identifiant de ressource à faible latence correspondant à une première ressource à faible latence d'après les informations de paramètres du premier terminal et au moins une relation de correspondance préétablie entre des informations de paramètres, un identifiant de ressource à faible latence, et un identifiant de terminal, le premier identifiant de ressource à faible latence étant un identifiant de ressource à faible latence correspondant au premier terminal ;
c.) affecter l'identifiant de terminal du premier terminal à un premier groupe de ressources à faible latence auquel appartient le premier identifiant de ressource à faible latence d'après les informations de paramètres du premier terminal ;
d.) mettre à jour (102) la ou les relations de correspondance en établissant une relation de correspondance supplémentaire qui est une relation de correspondance entre l'identifiant de terminal du premier terminal, le premier identifiant de ressource à faible latence et les informations de paramètres du premier terminal qui correspondent au premier groupe de ressources à faible latence et
e.) envoyer le premier identifiant de ressource à faible latence au dispositif (40) de réseau d'accès radio.

2. Procédé selon la revendication 1, les informations de paramètres du premier terminal comportant une ou plusieurs informations quelconques parmi les suivantes : une adresse de noeud de destination, un paramètre de latence, un nombre maximal de reprises de réémission times, une qualité de service, et un type de service qui correspondent à la communication à faible latence réalisée par le premier terminal.

3. Procédé selon l'une quelconque des revendications 1-2, le procédé comportant en outre, avant l'étape a.), les étapes consistant à :
recevoir un identifiant de terminal et des informations de paramètres d'au moins un terminal et au moins un identifiant de ressource à faible latence qui sont émis par le dispositif de réseau d'accès radio, l'identifiant ou les identifiants de ressource à faible latence comportant un identifiant de ressource à faible latence qui correspond à au moins une ressource à faible latence attribuée au terminal ou aux terminaux par le dispositif de réseau d'accès radio, et le terminal ou les terminaux présentant également une exigence de faible latence ;
grouper l'identifiant ou les identifiants de ressource à faible latence d'après les informations de paramètres de le terminal ou les terminaux, de façon à obtenir au moins un groupe de ressources à faible latence, le ou les groupes de ressources à faible latence comportant le premier groupe de ressources à faible latence ;
affecter un identifiant de terminal de chacun desdits terminaux dans l'identifiant de terminal du terminal ou des terminaux à un groupe de ressources à faible latence auquel appartient l'identifiant de ressource à faible latence correspondant à l'identifiant de terminal du terminal, et mettre à jour le ou les groupes de ressources à faible latence ; et
établir la ou les relations de correspondance entre des informations de paramètres, l'identifiant de ressource à faible latence, et l'identifiant de terminal d'après le ou les groupes de ressources à faible latence qui sont mis à jour, la ou les relations de correspondance entre les informations de paramètres, l'identifiant de ressource à faible latence, et l'identifiant de terminal correspondant au(x) groupe(s) de ressources à faible latence de manière biunivoque.

4. Procédé selon la revendication 3, l'acquisition du premier identifiant de ressource à faible latence d'après les informations de paramètres du premier terminal et au moins une relation de correspondance préétablie entre des informations de paramètres, l'identifiant de ressource à faible latence, et l'identifiant de terminal comportant les étapes consistant à :
déterminer, d'après les informations de paramètres du premier terminal, si un groupe de ressources à faible latence correspondant au premier terminal existe dans le ou les groupes de ressources à faible latence ;
lorsque le groupe de ressources à faible latence correspondant au premier terminal existe dans le ou les groupes de ressources à faible latence, déterminer en outre si une ressource à faible latence qui correspond au groupe de ressources à faible latence correspondant au premier terminal est capable de satisfaire une exigence de qualité de service de tous les terminaux correspondants après que l'identifiant de terminal du premier terminal a été affecté au groupe de ressources à faible latence correspondant au premier terminal, tous les terminaux correspondants étant des terminaux correspondant à tous les identifiants de terminaux compris dans le groupe de ressources à faible latence correspondant au premier terminal ;
lorsque la ressource à faible latence qui correspond au groupe de ressources à faible latence correspondant au premier terminal est capable de satisfaire l'exigence de la qualité de service des terminaux correspondant à tous les identifiants de terminaux après que l'identifiant de terminal du premier terminal a été affecté au groupe de ressources à faible latence correspondant au premier terminal, utiliser un identifiant de ressource à faible latence qui correspond au groupe de ressources à faible latence correspondant au premier terminal en tant que premier identifiant de ressource à faible latence correspondant au premier terminal, de façon à utiliser une ressource à faible latence correspondant au premier identifiant de ressource à faible latence en tant que ressource à faible latence du premier terminal ;
dans le cas contraire, lorsque la ressource à faible latence qui correspond au groupe de ressources à faible latence correspondant au premier terminal est incapable de satisfaire l'exigence de la qualité de service des terminaux correspondant à tous les identifiants de terminaux après que l'identifiant de terminal du premier terminal a été affecté au groupe de ressources à faible latence correspondant au premier terminal, envoyer au dispositif de réseau d'accès radio une demande d'affectation de ressource à faible latence qui transporte l'identifiant de terminal du premier terminal, de façon à demander au dispositif de réseau d'accès radio d'affecter une ressource à faible latence au premier terminal ; recevoir un deuxième identifiant de ressource à faible latence envoyé par le dispositif de réseau d'accès radio, le deuxième identifiant de ressource à faible latence étant un identifiant de ressource à faible latence qui correspond à la ressource à faible latence attribuée au premier terminal par le dispositif de réseau d'accès radio ; ajouter le deuxième identifiant de ressource à faible latence au groupe de ressources à faible latence correspondant au premier terminal ; et utiliser l'identifiant de ressource à faible latence qui correspond au groupe de ressources à faible latence correspondant au premier terminal en tant que premier identifiant de ressource à faible latence, de façon à utiliser la ressource à faible latence correspondant au premier identifiant de ressource à faible latence en tant que ressource à faible latence du premier terminal ; et
lorsqu'il n'existe aucun groupe de ressources à faible latence correspondant au premier terminal dans le ou les groupes de ressources à faible latence, envoyer au dispositif de réseau d'accès radio la demande d'affectation de ressource à faible latence qui transporte l'identifiant de terminal du premier terminal, de façon à demander au dispositif de réseau d'accès radio d'affecter une ressource à faible latence au premier terminal ; recevoir un troisième identifiant de ressource à faible latence envoyé par le dispositif de réseau d'accès radio, le troisième identifiant de ressource à faible latence étant un identifiant de ressource à faible latence qui correspond à la ressource à faible latence attribuée au premier terminal par le dispositif de réseau d'accès radio ; et utiliser le troisième identifiant de ressource à faible latence en tant que premier identifiant de ressource à faible latence correspondant au premier terminal.

5. Procédé selon la revendication 1, comportant en outre les étapes consistant à :
recevoir une demande d'authentification de validité qui transporte un identifiant de terminal d'un deuxième terminal et le premier identifiant de ressource à faible latence et est émise par le dispositif de réseau d'accès radio, la demande d'authentification de validité étant émise par le dispositif de réseau d'accès radio selon des données qui transportent l'identifiant de terminal du deuxième terminal, sont émises par le deuxième terminal et sont reçues sur la première ressource à faible latence (200) ; et
déterminer s'il est valide que le deuxième terminal occupe la première ressource à faible latence (201) ; si cela est valide, envoyer des informations de validité au dispositif de réseau d'accès radio, de façon à permettre au dispositif de réseau d'accès radio de transférer les données à un noeud correspondant de réseau central ou à un serveur de service selon les informations de validité (202) ; dans le cas contraire, si cela n'est pas valide, envoyer des informations d'invalidité au dispositif de réseau d'accès radio, de façon à permettre au dispositif de réseau d'accès radio de rejeter l'accès du deuxième terminal selon les informations d'invalidité et d'éliminer les données (203).

6. Procédé selon la revendication 5, la détermination de la validité de l'occupation par le deuxième terminal de la première ressource à faible latence comportant les étapes consistant à :
déterminer, selon la relation de correspondance entre les informations de paramètres, l'identifiant de ressource à faible latence, et l'identifiant de terminal qui correspondent au premier groupe de ressources à faible latence, si l'identifiant de terminal du deuxième terminal correspond au premier identifiant de ressource à faible latence ; s'il correspond, déterminer qu'il est valide que le deuxième terminal occupe la première ressource à faible latence ;
dans le cas contraire, déterminer qu'il n'est pas valide que le deuxième terminal occupe la première ressource à faible latence.

7. Procédé selon la revendication 1, comportant en outre les étapes consistant à :
recevoir une demande d'interrogation qui transporte le premier identifiant de ressource à faible latence et est émise par le dispositif de réseau d'accès radio ;
acquérir au moins un identifiant de terminal correspondant au premier identifiant de ressource à faible latence selon la relation de correspondance entre les informations de paramètres, l'identifiant de ressource à faible latence, et l'identifiant de terminal qui correspondent au premier groupe de ressources à faible latence, l'identifiant ou les identifiants de terminal comportant l'identifiant de terminal du premier terminal ; et
envoyer l'identifiant ou les identifiants de terminal au dispositif de réseau d'accès radio.

8. Dispositif (30) de gestion de ressources à faible latence configuré pour réaliser l'un quelconque des procédés selon les revendications 1 à 7.
